# EUROPEAN PATENT APPLICATION

(11) **EP 4 513 860 A1**
(43) Date of publication of application: **26.02.2025**
(21) Application number: 23802603.3
(22) Date of filing: 19.04.2023
(51) Int. Cl.: H04L 67/14, H04W 48/20

(54) **COMMUNICATION METHOD AND APPARATUS**

(30) Priority: 12.05.2022 CN 202210517869
(71) Applicant: Huawei Technologies Co., Ltd., Shenzhen, Guangdong 518129 (CN)
(72) Inventor: WU, Shaoyun, Shenzhen, Guangdong 518129 (CN); XING, Weijun, Shenzhen, Guangdong 518129 (CN)
(74) Representative: Thun, Clemens
(86) International application number: PCT/CN2023/089253
(87) International publication number: WO 2023/216828

(57) **Abstract**

This application provides a communication method and apparatus. The method includes: A first mobility management function network element receives a first message from a first access network element, where the first message indicates that a terminal device is to be handed over from the first access network element to a second access network element; and the first mobility management function network element determines, based on the first message, that the terminal device is to perform mobility management function network element handover, and sends a second message to a first access management function network element, where the second message is used to request the terminal device to perform mobility management function network element handover, or is used to request the terminal device to be handed over from the first mobility management function network element to a second mobility management function network element. Mobility management and access management of the terminal device can be separately implemented according to embodiments of this application.

## Description

### CROSS-REFERENCE TO RELATED APPLICATIONS

This application claims priority to Chinese Patent Application No. 202210517869.8, filed with the China National Intellectual Property Administration on May 12, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

An access and mobility management function (access and mobility management function, AMF) network element in a 5th generation (5th generation, 5G) mobile communication system is mainly responsible for mobility management (mobility management, MM) and access management (access management, AM) on user equipment (user equipment, UE). An MM function and an AM function of the AMF network element are integrated together, to jointly complete mobility management and access management of the UE. In other words, if an AMF network element is responsible for mobility management of UE, the AMF network element is also responsible for access management on the UE. It means that if the UE accesses a plurality of networks (for example, a plurality of network slices), the AMF network element needs to provide services for all the networks accessed by the UE; and if the UE accesses a core network by using a plurality of access technologies (for example, an access technology defined by the 3rd generation partnership project (3rd generation partnership project, 3GPP) or an access technology defined by non-3GPP), the AMF network element further needs to support the plurality of access technologies. This imposes a relatively high requirement on a capability of the AMF network element. Particularly, when a future network slice needs to support more functions with popularization of the communication industry, and access technologies of a future network are more diversified (for example, UE may access a core network by using a satellite, a relay, or another technology), a capability requirement for a single AMF network element increases, and a design becomes increasingly complex, which is not conducive to further expansion of the future network.

A current trend is to separate an MM function and an AM function of an AMF network element, to separately implement mobility management and access management on UE, thereby further enhancing network scalability. For example, the AM function performs authentication on access of the UE, and for different subnets (for example, network slices) accessed by the UE, mobility management may be separately performed on each subnet, so that the subnets are further isolated to improve network security. However, currently there is no corresponding solution for separately implementing mobility management and access management on the UE.

### SUMMARY

Embodiments of this application provide a communication method and apparatus, to separately implement mobility management and access management on UE.

According to a first aspect, this application provides a communication method. The method may be performed by a first mobility management function network element, or may be performed by another device including functions of the first mobility management function network element, or may be performed by a chip system or another functional module. The chip system or the functional module can implement functions of the first mobility management function network element. The chip system or the functional module is, for example, disposed in the first mobility management function network element. The method includes: A first mobility management function network element receives a first message from a first access network element, where the first message indicates that a terminal device is to be handed over from the first access network element to a second access network element; the first mobility management function network element determines, based on the first message, that the terminal device is to perform mobility management function network element handover; and the first mobility management function network element sends a second message to a first access management function network element, where the second message is used to request the terminal device to perform mobility management function network element handover, or is used to request the terminal device to be handed over from the first mobility management function network element to a second mobility management function network element.

In this embodiment of this application, the first mobility management function network element determines, in response to access network element handover of the terminal device, that the terminal device needs to perform mobility management function network element handover, and sends the second message to the first access management function network element. The second message is used to request (or indicate) the first access management function network element to hand over the terminal device from the first mobility management function network element to the second mobility management function network element, which means that the second mobility management function network element is determined by the first mobility management function network element, or is determined by both the first mobility management function network element and an access management function network element; or the second message is used to request the terminal device to perform mobility management function network element handover, which means that the second mobility management function network element is determined by an access management function network element. In other words, the first mobility management function network element can determine whether the terminal device is to perform mobility management function network element handover, so that a mobility management function network element implements mobility management on the terminal device. A target mobility management function network element for the terminal device during mobility management function network element handover may be determined by the first mobility management function network element, or determined by the first access management function network element, or determined by the first mobility management function network element and the first access management function network element. There are a plurality of determining manners and high flexibility, and a proper target mobility management function network element can be selected for the terminal device.

In an optional implementation, the method may further include: The first mobility management function network element receives a third message from the first access management function network element, where the third message includes identification information and/or address information of the second mobility management function network element. In the foregoing manner, the second mobility management function network element may be determined by the first mobility management function network element, or may be determined by the first access management function network element. The implementation is flexible.

In an optional implementation, the method may further include: The first mobility management function network element receives a fourth message from the first access management function network element, where the fourth message indicates that the terminal device is not to perform access management function network element handover, or indicates that the terminal device is to perform access management function network element handover; and the first mobility management function network element sends a fifth message to the second mobility management function network element, where the terminal device is not to perform access management function network element handover, and the fifth message includes information about the first access management function network element; or the terminal device is to perform access management function network element handover, and the fifth message includes information about a second access management function network element, where the second access management function network element is a target access management function network element for the terminal device during access management function network element handover. In the foregoing manner, the first mobility management function network element may determine, by using the fourth message, whether the terminal device is to perform access management function network element handover. If the terminal device is not to perform access management function network element handover, the first mobility management function network element may send the information about the first access management function network element to the second mobility management function network element, so that the second mobility management function network element establishes a connection with the first access management function network element. If the terminal device is to perform access management function network element handover, the first mobility management function network element may send the information about the second access management function network element to the second mobility management function network element, so that the second mobility management function network element establishes a connection with the second access management function network element.

In an optional implementation, the second message includes information corresponding to the second mobility management function network element and/or information corresponding to the second access network element. In the foregoing manner, the first mobility management function network element may send the information corresponding to the second mobility management function network element and/or the information corresponding to the second access network element to the first access management function network element. In this way, the first access management function network element may determine, based on the information, whether to perform access management function network element handover and whether to perform mobility management function network element handover.

In an optional implementation, the method may further include: The first mobility management function network element sends a sixth message to the second mobility management function network element, where the sixth message includes identification information of the second access network element and/or context information of the terminal device at the first mobility management function network element. In the foregoing manner, the first mobility management function network element may send the identification information of the second access network element and/or the context information of the terminal device at the first mobility management function network element to the second mobility management function network element, so that the second mobility management function network element maintains context information of the terminal device and completes mobility management function network element handover.

In an optional implementation, the method may further include: The first mobility management function network element releases a connection between the first mobility management function network element and the first access network element. In the foregoing manner, the first mobility management function network element may release the connection between the first mobility management function network element and the first access network element, thereby reducing consumption of network resources and improving utilization of network resources.

In an optional implementation, that the first mobility management function network element determines, based on the first message, that the terminal device is to perform mobility management function network element handover may be: The first mobility management function network element determines, based on the first message, that the second access network element has no association relationship with the first mobility management function network element; and the first mobility management function network element determines that the terminal device is to perform mobility management function network element handover. In the foregoing manner, the first mobility management function network element may determine, depending on whether there is an association relationship between the first mobility management function network element and the second access network element, whether to perform mobility management function network element handover. For example, if there is an association relationship between the first mobility management function network element and the second access network element, the first mobility management function network element may determine that the terminal device is not to perform mobility management function network element handover; or if there is no association relationship between the first mobility management function network element and the second access network element, the first mobility management function network element may determine that the terminal device is to perform mobility management function network element handover. The association relationship may be, for example, a connection relationship.

In an optional implementation, the method may further include: The first mobility management function network element receives a first response message from the first access management function network element, where the first response message indicates that the terminal device is to perform mobility management function network element handover. In the foregoing manner, an access management function network element may determine whether the terminal device is to perform mobility management function network element handover.

According to a second aspect, this application provides a communication method. The method may be performed by a first mobility management function network element, or may be performed by another device including functions of the first mobility management function network element, or may be performed by a chip system or another functional module. The chip system or the functional module can implement functions of the first mobility management function network element. The chip system or the functional module is, for example, disposed in the first mobility management function network element. The method includes: A first mobility management function network element receives a first message from a first access network element, where the first message indicates that a terminal device is to be handed over from the first access network element to a second access network element; the first mobility management function network element determines, based on the first message, that the terminal device is not to perform mobility management function network element handover; and the first mobility management function network element sends a seventh message to a first access management function network element, where the seventh message is used to request the terminal device not to perform mobility management function network element handover.

In an optional implementation, the method may further include: The first mobility management function network element receives a fourth message from the first access management function network element, where the fourth message indicates that the terminal device is to perform access management function network element handover.

In an optional implementation, the method may further include: The first mobility management function network element sends an eighth message to a second access management function network element; or the first mobility management function network element receives an eighth message from a second access management function network element, where the eighth message is used to request to establish a connection between the first mobility management function network element and the second access management function network element, and the second access management function network element is a target access management function network element for the terminal device during access management function network element handover. In the foregoing manner, when the terminal device is to perform access management function network element handover, the request for establishing the connection between the first mobility management function network element and the second access management function network element may be initiated by the first mobility management function network element, or may be initiated by the second access management function network element. The implementation is flexible.

In an optional implementation, the seventh message includes information corresponding to the second access network element.

In an optional implementation, the method may further include: The first mobility management function network element releases a connection between the first mobility management function network element and the first access network element.

In an optional implementation, that the first mobility management function network element determines, based on the first message, that the terminal device is not to perform mobility management function network element handover may be: The first mobility management function network element determines, based on the first message, that the second access network element has an association relationship with the first mobility management function network element; and the first mobility management function network element determines that the terminal device is not to perform mobility management function network element handover.

In an optional implementation, the method may further include: The first mobility management function network element receives a second response message from the first access management function network element, where the second response message indicates that the terminal device is not to perform mobility management function network element handover.

For technical effects of the second aspect or the implementations, refer to the descriptions of the technical effects of the first aspect or the corresponding implementations.

According to a third aspect, this application provides a communication method. The method may be performed by a first access management function network element, or may be performed by another device including functions of the first access management function network element, or may be performed by a chip system or another functional module. The chip system or the functional module can implement functions of the first access management function network element. The chip system or the functional module is, for example, disposed in the first access management function network element. The method includes: A first access management function network element receives a second message from a first mobility management function network element, where the second message is used to request a terminal device to perform mobility management function network element handover, or is used to request the terminal device to be handed over from the first mobility management function network element to a second mobility management function network element, and the terminal device is to be handed over from a first access network element to a second access network element; and the first access management function network element sends a first response message to the first mobility management function network element, where the first response message indicates that the terminal device is to perform mobility management function network element handover.

In an optional implementation, the method may further include: The first access management function network element sends a third message to the first mobility management function network element, where the third message includes identification information and/or address information of the second mobility management function network element.

In an optional implementation, the method may further include: The first access management function network element determines whether the terminal device is to perform access management function network element handover. In the foregoing manner, the first access management function network element may determine, in response to access network element handover of the terminal device, whether the terminal device is to perform access management function network element handover, so that the access management function network element implements access management on the terminal device.

In an optional implementation, the method may further include: The first access management function network element sends a ninth message to a second access management function network element, where the ninth message is used to request the terminal device to perform mobility management function network element handover, and the second access management function network element is a target access management function network element for the terminal device during access management function network element handover; and the first access management function network element receives a tenth message from the second access management function network element, where the tenth message includes the identification information and/or address information of the second mobility management function network element. In the foregoing manner, when the terminal device is to perform access management function network element handover, the second mobility management function network element may be determined by the first access management function network element, or may be determined by the second access management function network element. The implementation is flexible.

In an optional implementation, the method may further include: The first access management function network element receives an eleventh message from the second mobility management function network element; or the first access management function network element sends an eleventh message to the second mobility management function network element, where the eleventh message is used to request to establish a connection between the second mobility management function network element and the first access management function network element. In the foregoing manner, when the terminal device is not to perform access management function network element handover, the request for establishing the connection between the first access management function network element and the second mobility management function network element may be initiated by the first access management function network element, or may be initiated by the second mobility management function network element. The implementation is flexible.

In an optional implementation, the method may further include: The first access management function network element sends a fourth message to the first mobility management function network element, where the fourth message indicates that the terminal device is not to perform access management function network element handover, or indicates that the terminal device is to perform access management function network element handover.

In an optional implementation, the first access management function network element determines whether the terminal device is to perform access management function network element handover may be: When the second access network element has an association relationship with the first access management function network element, the first access management function network element determines that the terminal device is not to perform access management function network element handover; or when the second access network element has no association relationship with the first access management function network element, the first access management function network element determines that the terminal device is to perform access management function network element handover.

In an optional implementation, the second message includes information corresponding to the second mobility management function network element and/or information corresponding to the second access network element.

In an optional implementation, the method may further include: The first access management function network element releases a connection between the first access management function network element and the first access network element.

For technical effects achieved in the third aspect or the possible implementations, refer to the description of the technical effects achieved in the first aspect or the corresponding implementations.

According to a fourth aspect, this application provides a communication method. The method may be performed by a first access management function network element, or may be performed by another device including functions of the first access management function network element, or may be performed by a chip system or another functional module. The chip system or the functional module can implement functions of the first access management function network element. The chip system or the functional module is, for example, disposed in the first access management function network element. The method includes: A first access management function network element receives a seventh message from a first mobility management function network element, where the seventh message is used to request a terminal device not to perform mobility management function network element handover, and the terminal device is to be handed over from a first access network element to a second access network element; and the first access management function network element sends a second response message to the first mobility management function network element, where the second response message indicates that the terminal device is not to perform mobility management function network element handover.

In an optional implementation, the method may further include: The first access management function network element determines that the terminal device is to perform access management function network element handover.

In an optional implementation, the method may further include: The first access management function network element sends a fourth message to the first mobility management function network element, where the fourth message indicates that the terminal device is to perform access management function network element handover.

In an optional implementation, the first access management function network element determines that the terminal device is to perform access management function network element handover may be: When the second access network element has no association relationship with the first access management function network element, the first access management function network element determines that the terminal device is to perform access management function network element handover.

In an optional implementation, the seventh message includes information corresponding to the second access network element.

In an optional implementation, the method may further include: The first access management function network element releases a connection between the first access management function network element and the first access network element.

For technical effects achieved in the fourth aspect or the possible implementations, refer to the description of the technical effects achieved in the first aspect or the corresponding implementations.

According to a fifth aspect, this application provides a communication method. The method may be performed by a second mobility management function network element, or may be performed by another device including functions of the second mobility management function network element, or may be performed by a chip system or another functional module. The chip system or the functional module can implement functions of the second mobility management function network element. The chip system or the functional module is, for example, disposed in the second mobility management function network element. The method includes: A second mobility management function network element receives a fifth message from a first mobility management function network element; and if the fifth message includes information about a first access management function network element, the second mobility management function network element sends an eleventh message to the first access management function network element, where the eleventh message is used to request to establish a connection between the second mobility management function network element and the first access management function network element; or if the fifth message includes information about a second access management function network element, the second mobility management function network element sends a twelfth message to the second access management function network element, where the twelfth message is used to request to establish a connection between the second mobility management function network element and the second access management function network element, the second access management function network element is a target access management function network element for a terminal device during access management function network element handover, and the terminal device is to be handed over from a first access network element to a second access network element.

In an optional implementation, the method may further include: The second mobility management function network element receives a sixth message from the first mobility management function network element, where the sixth message includes identification information of the second access network element and/or context information of the terminal device at the first mobility management function network element; and the second mobility management function network element updates context information of the terminal device based on the sixth message.

For technical effects achieved in the fifth aspect or the possible implementations, refer to the description of the technical effects achieved in the first aspect or the corresponding implementations.

According to a sixth aspect, this application provides a communication method. The method may be performed by a second mobility management function network element, or may be performed by another device including functions of the second mobility management function network element, or may be performed by a chip system or another functional module. The chip system or the functional module can implement functions of the second mobility management function network element. The chip system or the functional module is, for example, disposed in the second mobility management function network element. The method includes: A second mobility management function network element receives an eleventh message from a first access management function network element, where the eleventh message is used to request to establish a connection between the second mobility management function network element and the first access management function network element; or a second mobility management function network element receives a twelfth message from a second access management function network element, where the twelfth message is used to request to establish a connection between the second mobility management function network element and the second access management function network element, the second access management function network element is a target access management function network element for a terminal device during access management function network element handover, and the terminal device is to be handed over from a first access network element to a second access network element.

In an optional implementation, the method may further include: The second mobility management function network element receives a sixth message from the first mobility management function network element, where the sixth message includes identification information of the second access network element and/or context information of the terminal device at the first mobility management function network element; and the second mobility management function network element updates context information of the terminal device based on the sixth message.

For technical effects achieved in the sixth aspect or the possible implementations, refer to the description of the technical effects achieved in the first aspect or the corresponding implementations.

According to a seventh aspect, this application provides a communication method. The method may be performed by a second access management function network element, or may be performed by another device including functions of the second access management function network element, or may be performed by a chip system or another functional module. The chip system or the functional module can implement functions of the second access management function network element. The chip system or the functional module is, for example, disposed in the second access management function network element. The method includes: A second access management function network element receives a ninth message from a first access management function network element, where the ninth message is used to request the terminal device to perform mobility management function network element handover; and if the terminal device is not to perform mobility management function network element handover, the second access management function network element sends an eighth message to a first mobility management function network element, where the eighth message is used to request to establish a connection between the first mobility management function network element and the second access management function network element; or if the terminal device is to perform mobility management function network element handover, the second access management function network element sends a twelfth message to a second mobility management function network element, where the twelfth message is used to request to establish a connection between the second mobility management function network element and the second access management function network element, the second mobility management function network element is a target mobility management function network element for the terminal device during mobility management function network element handover, and the terminal device is to be handed over from a first access network element to a second access network element.

In an optional implementation, the method may further include: The second access management function network element sends a tenth message to the first access management function network element, where the tenth message includes identification information and/or address information of the second mobility management function network element.

For technical effects achieved in the seventh aspect or the possible implementations, refer to the description of the technical effects achieved in the first aspect or the corresponding implementations.

According to an eighth aspect, this application provides a communication method. The method may be performed by a second access management function network element, or may be performed by another device including functions of the second access management function network element, or may be performed by a chip system or another functional module. The chip system or the functional module can implement functions of the second access management function network element. The chip system or the functional module is, for example, disposed in the second access management function network element. The method includes: A second access management function network element receives an eighth message from a first mobility management function network element, where the eighth message is used to request to establish a connection between the first mobility management function network element and the second access management function network element; or a second access management function network element receives a twelfth message from a second mobility management function network element, where the twelfth message is used to request to establish a connection between the second mobility management function network element and the second access management function network element, the second mobility management function network element is a target mobility management function network element for a terminal device during mobility management function network element handover, and the terminal device is to be handed over from a first access network element to a second access network element.

In an optional implementation, the method may further include: The second access management function network element receives a ninth message from the first access management function network element, where the ninth message is used to request the terminal device to perform mobility management function network element handover; and the second access management function network element sends a tenth message to the first access management function network element, where the tenth message includes identification information and/or address information of the second mobility management function network element.

For technical effects achieved in the eighth aspect or the possible implementations, refer to the description of the technical effects achieved in the first aspect or the corresponding implementations.

According to a ninth aspect, this application provides a communication apparatus. The communication apparatus may be the first mobility management function network element according to the first aspect or the second aspect, or the first access management function network element according to the third aspect or the fourth aspect, or the second mobility management function network element according to the fifth aspect or the sixth aspect, or the second access management function network element according to the seventh aspect or the eighth aspect. The communication apparatus is, for example, the first mobility management function network element, a larger device including the first mobility management function network element, or a functional module in the first mobility management function network element; or the first access management function network element, a larger device including the first access management function network element, or a functional module in the first access management function network element; or the second mobility management function network element, a larger device including the second mobility management function network element, or a functional module in the second mobility management function network element; or the second access management function network element, a larger device including the second access management function network element, or a functional module in the second access management function network element. The functional module may be, for example, a baseband apparatus or a chip system.

In an optional implementation, the communication apparatus includes a baseband apparatus and a radio frequency apparatus. In another optional implementation, the communication apparatus includes a processing module (also referred to as a processing unit sometimes) and a transceiver module (also referred to as a transceiver unit sometimes). The transceiver module can implement a sending function and a receiving function. When the transceiver module implements the sending function, the transceiver module may be referred to as a sending module (also referred to as a sending unit sometimes). When the transceiver module implements the receiving function, the transceiver module may be referred to as a receiving module (also referred to as a receiving unit sometimes). The sending module and the receiving module may be a same functional module, the functional module is referred to as a transceiver module, and the functional module can implement the sending function and the receiving function. Alternatively, the sending module and the receiving module may be different functional modules, and the transceiver module is a general term for these functional modules.

In an optional implementation, the communication apparatus further includes a storage unit (also referred to as a storage module sometimes). The processing unit is configured to: be coupled to the storage unit, and execute a program or instructions in the storage unit, to enable the communication apparatus to perform functions of the first mobility management function network element according to the first aspect or the second aspect, or perform functions of the first access management function network element according to the third aspect or the fourth aspect, or perform functions of the second mobility management function network element according to the fifth aspect or the sixth aspect, or perform functions of the second access management function network element according to the seventh aspect or the eighth aspect.

According to a tenth aspect, this application provides a communication system, including at least one network element of the first mobility management function network element according to the first aspect, the first access management function network element according to the third aspect, the second mobility management function network element according to the fifth aspect, or the second access management function network element according to the seventh aspect; or including at least one network element of the first mobility management function network element according to the second aspect, the first access management function network element according to the fourth aspect, the second mobility management function network element according to the sixth aspect, or the second access management function network element according to the eighth aspect.

According to an eleventh aspect, this application provides a communication apparatus, including a processor and a memory, where the memory is coupled to the processor, and the processor is configured to perform the methods in the foregoing aspects.

According to a twelfth aspect, this application provides a computer-readable storage medium, where the computer-readable storage medium is configured to store a computer program or instructions, and when the computer program or the instructions are run, the method performed by the first mobility management function network element, the first access management function network element, the second mobility management function network element, or the second access management function network element in the foregoing aspects is implemented.

According to a thirteenth aspect, this application provides a computer program product including instructions. When the computer program product is run on a computer, the methods according to the foregoing aspects are implemented.

According to a fourteenth aspect, this application provides a chip system, including a processor and a communication interface. The chip system is configured to implement the methods in the foregoing aspects. The chip system may include a chip, or may include a chip and another discrete component, or the like.

### BRIEF DESCRIPTION OF DRAWINGS

FIG. 1 is a diagram of a network architecture of a 5G network;
FIG. 2A is a schematic flowchart of an N2 handover preparation phase;
FIG. 2B is a schematic flowchart of an N2 handover execution phase;
FIG. 3 is a diagram of a network architecture of a 5G network to which embodiments of this application are applicable;
FIG. 4 is a schematic flowchart of a communication method according to an embodiment of this application;
FIG. 5 is another schematic flowchart of a communication method according to an embodiment of this application;
FIG. 6 is another schematic flowchart of a communication method according to an embodiment of this application;
FIG. 7 is another schematic flowchart of a communication method according to an embodiment of this application;
FIG. 8 is still another schematic flowchart of a communication method according to an embodiment of this application;
FIG. 9 is a diagram of a structure of a communication apparatus according to an embodiment of this application; and
FIG. 10 is another diagram of a structure of a communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

It should be noted that in embodiments of this application, "a plurality of" means two or more. In view of this, in embodiments of this application, "a plurality of" may be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects. The terms "system" and "network" may be used interchangeably in embodiments of this application.

Unless otherwise specified, ordinal numbers such as "first" and "second" in embodiments of this application are used to distinguish between a plurality of objects, and are not intended to limit a sequence, a time sequence, priorities, or importance of the plurality of objects.

Technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, or a 5th generation (5th generation, 5G) mobile communication system or new radio (new radio, NR) system, or applied to a future communication system or another similar communication system. In embodiments of this application, a 5G communication system is used as an example for description.

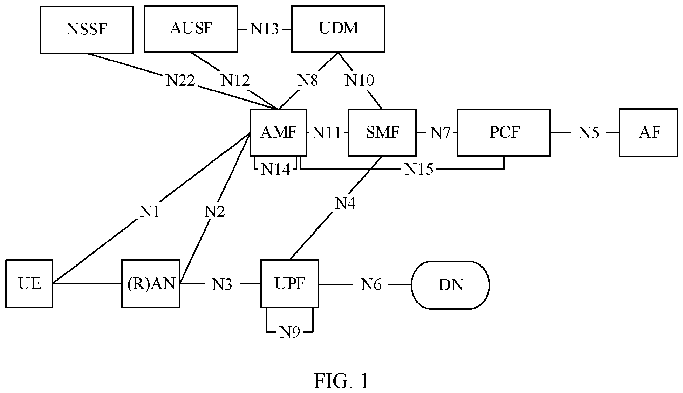

FIG. 1 shows a 5G communication system architecture. The communication system architecture may include a (radio) access network (the (R)AN in FIG. 1), a terminal device, and a core network. For example, in the communication system architecture, the (radio) access network may include an access network element.

The terminal device is a device that provides voice and/or data connectivity for a user. The terminal device in this application may be a terminal device or a terminal, or a hardware component, inside the terminal device, that can implement functions of the terminal device.

In embodiments of this application, the terminal device may be referred to as user equipment (user equipment, UE), a mobile station (mobile station, MS), a mobile terminal (mobile terminal, MT), or the like, for example, may include a handheld device with a wireless connection function, or a processing device connected to a wireless modem. The terminal may communicate with the core network through the radio access network (radio access network, RAN), and exchange a voice and/or data with the RAN. Examples of some terminal devices are: an uncrewed aerial vehicle, a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), a barcode, radio frequency identification (radio frequency identification, RFID), a sensor, a satellite navigation system such as a global positioning system (global positioning system, GPS) or a BeiDou positioning system, a laser scanner, and other information sensing devices.

The terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that are dedicated to only one type of application function and need to collaboratively work with other devices such as smartphones, for example, various smart bands, smart helmets, or smart jewelry for monitoring physical signs. The terminal may alternatively be a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal device in a future-evolved public land mobile network (public land mobile network, PLMN), a vehicle device in vehicle to everything (vehicle to everything, V2X), or customer premises equipment (customer premises equipment, CPE). The terminal device may alternatively be an in-vehicle terminal device, for example, a terminal device located in a vehicle (for example, placed in a vehicle or installed in a vehicle), for example, a medical device or an in-vehicle camera in an ambulance. For example, the in-vehicle terminal device is also referred to as an on-board unit (on-board unit, OBU).

In embodiments of this application, the access network element may also be referred to as an access network device, is a device having a wireless transceiver function, and is configured to communicate with a terminal device. The access network element includes but is not limited to a base station (base transceiver station (base transceiver station, BTS), NodeB, eNodeB/eNB, or gNodeB/gNB), a transmission reception point (transmission reception point, TRP), a base station evolved in 3GPP, an access node in a wireless fidelity (wireless fidelity, Wi-Fi) system, a wireless relay node, a wireless backhaul node, a satellite, an uncrewed aerial vehicle, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network element may be a radio controller in a cloud radio access network (cloud radio access network, CRAN) scenario, a central unit (centralized unit, CU), and/or a distributed unit (distributed unit, DU). For example, an access network element in a vehicle to everything (vehicle to everything, V2X) technology may be a road side unit (road side unit, RSU). An example in which the access network element is the base station is used below for description. The base station may communicate with the terminal device, or may communicate with the terminal device via a relay station. The terminal device may communicate with a plurality of base stations in different access technologies.

Devices in the core network include but are not limited to devices configured to implement functions such as mobility management, data processing, session management, and policy and charging. A 5GS is used as an example. The devices in the core network may include a network exposure function (network exposure function, NEF) network element, a policy control function (policy control function, PCF) network element, a unified data management (unified data management, UDM) network element, an application function (application function, AF) network element, an access and mobility management function (access and mobility management function, AMF) network element, a session management function (session management function, SMF) network element, a user plane function (user plane function, UPF) network element, and the like.

Main functions of the access and mobility management function network element may include user registration management, SMF network element selection, mobility management, access authentication/authorization, and the like. For example, in a 5G communication system, the access and mobility management function network element may be an AMF network element, as shown in FIG. 1. In a future communication system such as a 6G communication system, the access and mobility management function network element may still be an AMF network element, or may have another name. This is not limited in embodiments of this application.

The foregoing mainly describes network elements that may be used in embodiments of this application. In addition, FIG. 1 further relates to another network element. Details are not described herein again.

The network elements in the core network may be network elements implemented on dedicated hardware, or may be software instances running on dedicated hardware, or may be instances of virtualization functions on an appropriate platform. For example, the foregoing virtualization platform may be a cloud platform. In addition, each network element in the core network may also be referred to as a function entity or a device. For example, the user plane function network element may also be referred to as a user plane function entity or a user plane function device, the policy control function network element may also be referred to as a policy control function entity or a policy control function device, and the unified data management network element may also be referred to as a unified data management entity or a unified data management device.

In FIG. 1, Nnef, Namf, Npcf, Nsmf, Nudm, Naf, N1, N2, N3, N4, and N6 are interface serial numbers. For meanings of the interface serial numbers, refer to meanings defined in a 3GPP standard protocol. This is not limited herein.

It should be understood that embodiments of this application are not limited to the communication system shown in FIG. 1. Names of the network elements shown in FIG. 1 are merely used as examples for description herein, and are not used as limitations on the network elements included in the communication system architecture to which the method in embodiments of this application is applicable. Names of devices that implement core network functions in systems of different access technologies may be different. This is not limited in embodiments this application.

It should be noted that the communication system shown in FIG. 1 does not constitute a limitation on a communication system to which embodiments of this application are applicable. The communication system architecture shown in FIG. 1 is a 5G system architecture. Optionally, in addition to the 5G system, the technical solutions provided in embodiments of this application may be further applied to a 4th generation mobile communication technology (the 4th generation, 4G) system, for example, an LTE system, or may be further applied to a next generation mobile communication system or another similar communication system. This is not specifically limited.

It should be noted that the communication system architecture shown in FIG. 1 is not limited to including only the network elements shown in the figure, and may further include another device not shown in the figure. Details are not described herein one by one.

It should be noted that a distribution form of the network elements is not limited in embodiments of this application. The distribution form shown in FIG. 1 is merely an example, and is not limited in embodiments of this application.

For ease of description, the network elements shown in FIG. 1 are used as examples for description of subsequent network elements in embodiments of this application, and XX network element is directly referred to as XX for short. For example, an AMF network element is referred to as an AMF for short. It should be understood that names of all network elements in embodiments of this application are merely used as examples, and may also be referred to as other names in future communication, or the network element in embodiments of this application may be replaced by another entity or device that has a same function in future communication. This is not limited in embodiments of this application. Unified descriptions are provided herein, and details are not described below again.

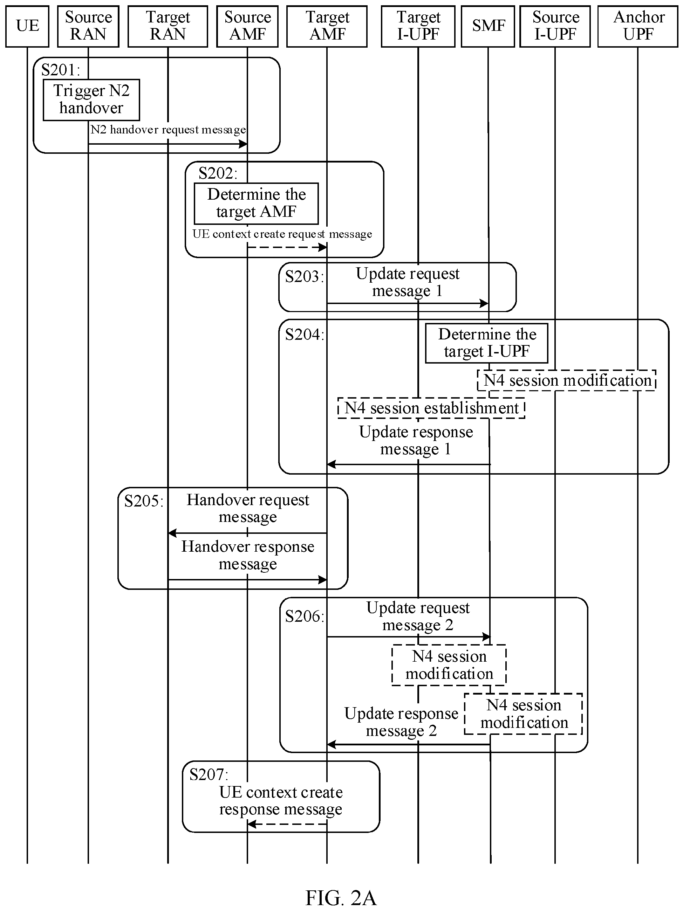

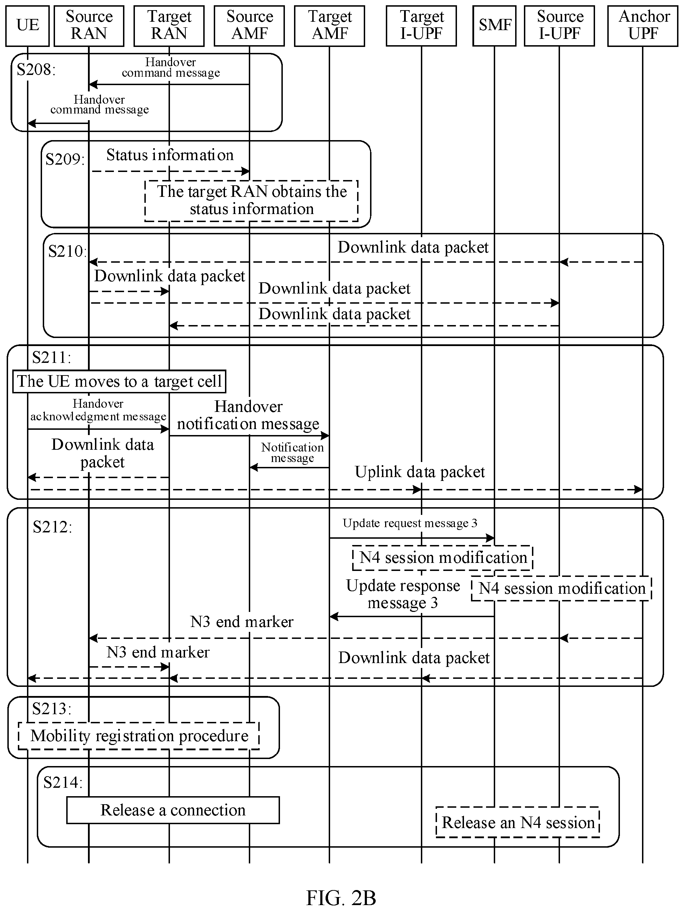

Embodiments of this application relate to a scenario in which a terminal device performs RAN handover. In this scenario, the terminal device may need to perform AMF handover. The AMF handover may also be referred to as N2 handover. N2 handover includes a preparation phase and an execution phase. FIG. 2A and FIG. 2B are schematic flowcharts of an N2 handover preparation phase and an N2 handover execution phase, respectively.

The N2 handover preparation phase mainly involves a source RAN initiating a handover procedure. Then, a source AMF finds that a target RAN is not within a service area of the source AMF, or the source RAN finds that a target RAN is not directly connected to the source RAN. In this case, the source AMF starts N2 handover preparation. As shown in FIG. 2A, the N2 handover preparation phase may include the following steps.

S201: A source RAN triggers N2 handover, and sends an N2 handover request message to a source AMF. The N2 handover request message includes an ID of a target RAN and information about a PDU session to be handed over.

S202: The source AMF determines whether the source AMF can continue to serve a location area of UE. If the source AMF cannot continue to provide services, the source AMF determines a target AMF, and sends a UE context create request message to the target AMF. The UE context create request message may include the ID of the target RAN and the information about the PDU session to be handed over.

S203: The target AMF sends an update request message 1 to an SMF corresponding to each PDU session to be handed over. In addition, the target AMF starts to monitor a response message of the SMF. One SMF is used as an example in FIG. 2A. The update request message 1 may be a PDU session update context request message.

S204: The SMF determines whether a source intermediate UPF (intermediate UPF, I-UPF) can continue to serve the target RAN, or whether another I-UPF is required. In FIG. 2A, an example in which another I-UPF is required is used. The SMF determines a target I-UPF, and sends an update response message 1 to the target AMF. The update response message 1 may be a PDU session update context response message. Optionally, the SMF may perform N4 session modification with an anchor UPF. Optionally, the SMF may further establish an N4 session with the target I-UPF.

S205: The target AMF sends a handover request message to the target RAN. The handover request message includes the information about the PDU session to be handed over. The target RAN sends a handover response message to the target AMF. The handover response message includes N3 tunnel information corresponding to each PDU session to be handed over.

S206: The target AMF sends an update request message 2 to the SMF, and receives an update response message 2 from the SMF. The update request message 2 includes the N3 tunnel information corresponding to each PDU session to be handed over. Optionally, the SMF may perform N4 session modification with the target I-UPF. Optionally, the SMF may further perform N4 session modification with the source I-UPF. The update request message 2 may be a PDU session update context request message. The update response message 2 may be a PDU session update context response message.

S207: The target AMF sends a UE context create response message to the source AMF, where the UE context create response message may include information about a PDU session that is not accepted by the target RAN, indirect forwarding tunnel information, or the like.

At this point, the N2 handover preparation phase is complete. The following describes an implementation process of the N2 handover execution phase. As shown in FIG. 2B, the N2 handover execution phase may include the following steps.

S208: The source AMF sends a handover command message to the source RAN, and the source RAN sends the handover command message to the UE. The handover command message may include the information included in the UE context create response message in S207. After receiving the handover command message, the UE leaves a source cell and starts to connect to a target cell.

S209: The source RAN may send status information to the target RAN through the source AMF or through the source AMF and the target AMF. For example, if the source AMF is relocated, the source AMF sends the status information to the target AMF, and then the target AMF sends the status information to the target RAN.

S210: After step S208, forward a downlink data packet that arrives at the source RAN to the target RAN. For example, the anchor UPF sends a downlink data packet to the source RAN through the source I-UPF. After receiving the downlink data packet, the source RAN may send the downlink data packet to the target RAN; or the source RAN sends the downlink data packet to the source I-UPF, and then the source I-UPF sends the downlink data packet to the target RAN.

S211: After receiving the handover command, the UE moves to the target cell and sends a handover acknowledgment message to the target RAN. By sending the message, the UE considers that the handover is successful. The target RAN sends a handover notification message to the target AMF, and thus the target RAN considers that the handover is successful. The target AMF sends a notification message to the source AMF, to notify the source AMF that the N2 handover notification message has been received from the target RAN. Optionally, the target RAN may send the downlink data packet to the UE. Optionally, the UE may send an uplink data packet to the anchor UPF through the target I-UPF.

S212: The target AMF sends an update request message 3 to SMFs to which all PDU sessions that have been handed over belong. The update request message 3 includes N3 tunnel information to be provided by the SMF to an NG-RAN, for forwarding downlink data to the target RAN. In FIG. 2B, one SMF is used as an example. The target AMF receives an update request response message from the SMF. Optionally, the SMF performs N4 session modification with the target I-UPF. Optionally, the SMF may further perform N4 session modification with the anchor UPF. Optionally, the anchor UPF sends an N3 end marker to the source RAN through the source I-UPF, and the source RAN sends the N3 end marker to the target RAN. Then, the anchor UPF sends a downlink data packet to the target I-UPF, the target I-UPF forwards the downlink data packet to the target RAN, and the target RAN sends the downlink data packet to the UE. The update request message 3 may be a PDU session update context request message. The update response message 3 may be a PDU session update context response message.

S213: The UE initiates a mobility registration procedure.

S214: The source AMF releases a connection between the source AMF and the source RAN. Optionally, the SMF releases a connection between the SMF and the source I-UPF.

At this point, the N2 handover is complete.

It should be noted that, for specific implementations of the steps in FIG. 2A and FIG. 2B, refer to related content in 3GPP. Details are not described herein again.

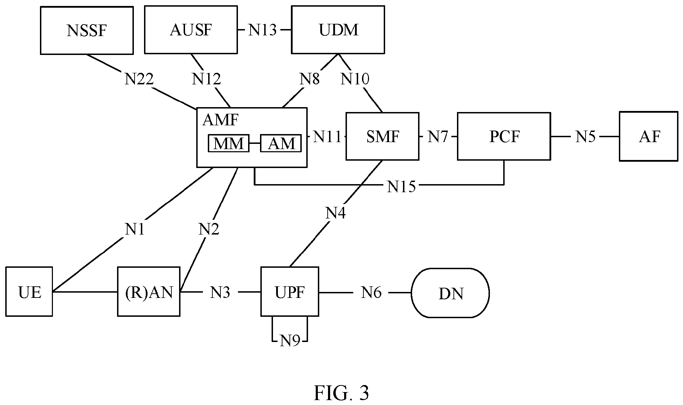

A current trend is to separate an MM function and an AM function of an AMF. FIG. 3 is a diagram of a communication system to which embodiments of this application are applicable. In FIG. 3, an AMF includes an MM and an AM. The MM and the AM are logically independent, and may be responsible for different functions. For example, the MM is mainly responsible for mobility management of UE, and the AM is mainly responsible for access management of UE. The MM and the AM may be independent of each other in hardware implementation, or may be integrated together. This is not limited in embodiments of this application. Therefore, how to implement mobility management of UE by the MM and access management of UE by the AM are technical problems that need to be resolved.

In view of this, embodiments of this application provide a communication method and apparatus. A first mobility management function network element receives a first message from a first access network element, where the first message indicates that a terminal device is to be handed over from the first access network element to a second access network element; the first mobility management function network element determines, based on the first message, that the terminal device performs mobility management function network element handover; and the first mobility management function network element sends a second message to a first access management function network element, where the second message is used to request the terminal device to perform mobility management function network element handover, or is used to request the terminal device to be handed over from the first mobility management function network element to a second mobility management function network element.

To better describe embodiments of this application, the following describes methods provided in embodiments of this application with reference to the accompanying drawings. In the accompanying drawings corresponding to embodiments of this application, all optional steps are represented by dashed lines. The method provided in each embodiment of this application may be applied to the network architecture shown in FIG. 3. For example, the mobility management function network element in each embodiment of this application may be the MM in FIG. 3, the access management function network element in each embodiment of this application may be the AM in FIG. 3, the terminal device in each embodiment of this application may be the UE in FIG. 1 or FIG. 3, and the access network element in each embodiment of this application may be the RAN in FIG. 1 or FIG. 3.

It should be noted that in embodiments of this application, an application scenario in which the terminal device performs access network element handover is used as an example for description. For ease of description, in the following embodiments, a source (source) access network element for the terminal device during access network element handover may be referred to as a first access network element, and is denoted as an S-RAN; and a target (target) access network element for the terminal device during access network element handover is referred to as a second access network element, and is denoted as a T-RAN. Access network element handover of the terminal device may trigger mobility management function network element handover. For ease of description, in the following embodiments, a source mobility management function network element for the terminal device during mobility management function network element handover may be referred to as a first mobility management function network element, and is denoted as an S-MM; and a target mobility management function network element for the terminal device during mobility management function network element handover is referred to as a second mobility management function network element, and is denoted as a T-MM. Access network element handover of the terminal device may also trigger access management function network element handover. For ease of description, in the following embodiments, a source access management function network element for the terminal device during access management function network element handover may be referred to as a first access management function network element, and is denoted as an S-AM; and a target access management function network element for the terminal device during access management function network element handover is referred to as a second access management function network element, and is denoted as a T-AM.

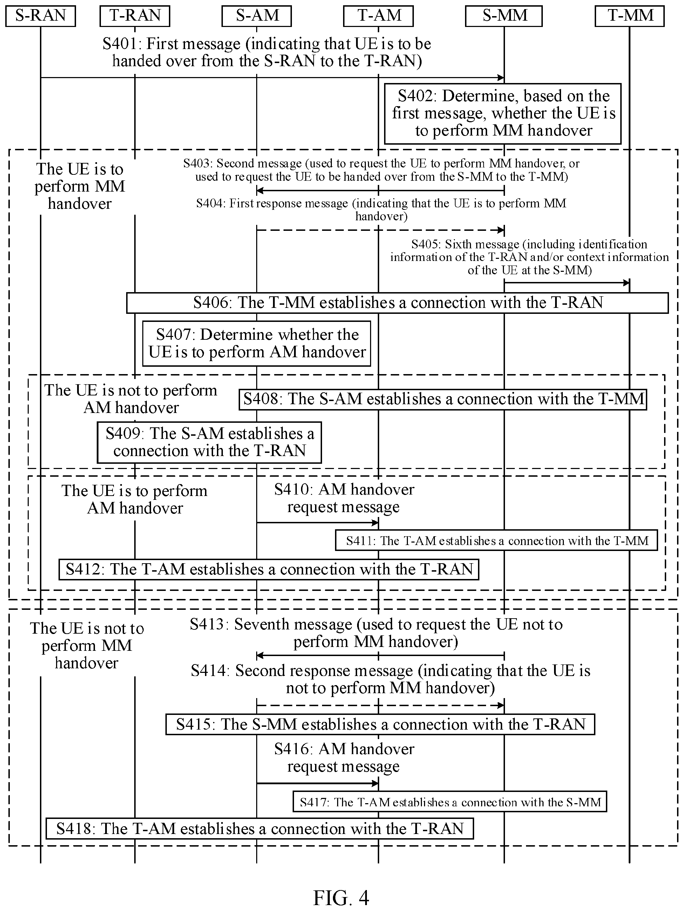

FIG. 4 is a schematic flowchart of a communication method according to an embodiment of this application. In this embodiment, UE performs MM handover. As shown in FIG. 4, the method may include the following content.

S401: An S-RAN sends a first message to an S-MM. Correspondingly, the S-MM receives the first message.

In S401, the S-RAN triggers a handover procedure, and sends the first message to the S-MM. For example, in a process of communication between UE and the S-RAN, the S-RAN receives measurement information reported by the UE, and determines, based on the measurement information, that signal strength of other RANs is higher than signal strength of the S-RAN, or signal strength of other RANs is higher than a handover threshold, or signal strength of other RANs is higher than signal strength of the S-RAN and the signal strength of the other RANs is higher than a handover threshold. In this case, the S-RAN triggers the handover procedure, determines a T-RAN, and sends the first message to the S-MM. The other RANs include the T-RAN. For example, the S-RAN may determine that a RAN with highest signal strength in the other RANs is the T-RAN. However, this is not limited in this embodiment of this application.

The first message may be, for example, a handover request message. However, this is not limited in this embodiment of this application. The first message may indicate that the UE is to be handed over from the S-RAN to the T-RAN, or indicate that the UE prepares to be handed over from the S-RAN to the T-RAN. It should be understood that the first message may explicitly indicate that the UE is to be handed over from the S-RAN to the T-RAN, or may implicitly indicate that the UE is to be handed over from the S-RAN to the T-RAN. For example, the first message includes information about the T-RAN. This is not limited in this embodiment of this application. The information about the T-RAN may be, for example, identification information of the T-RAN, or address information of the T-RAN, or identification information of the T-RAN and address information of the T-RAN. The address information of the T-RAN may include, for example, an internet protocol (internet protocol, IP) address, a port number, or a uniform resource locator (uniform resource locator, URL) address. However, this is not limited in this embodiment of this application.

S402: The S-MM determines, based on the first message, whether the UE is to perform MM handover.

For example, the S-MM may determine, based on the first message, whether there is an association relationship (or a binding relationship) between the T-RAN and the S-MM, and determine, based on the association relationship, whether the UE is to perform MM handover. For example, if the S-MM determines, based on the first message, that there is no association relationship between the T-RAN and the S-MM, the S-MM may determine that the UE is to perform MM handover. For another example, if the S-MM determines, based on the first message, that there is an association relationship between the T-RAN and the S-MM, the S-MM may determine that the UE is not to perform MM handover. Specifically, the S-MM may determine, based on the information about the T-RAN, whether there is an association relationship between the T-RAN and the S-MM. For example, the S-MM may determine, based on the identification information of the T-RAN, the address information of the T-RAN, a network topology of the T-RAN, or the like, whether there is an association relationship between the S-MM and the T-RAN.

It should be noted that the association relationship in embodiments of this application may be understood as a link relationship. However, this embodiment of this application is not limited thereto. For example, if there is an association relationship between the T-RAN and the S-MM, it may be understood as that there is a link relationship between the T-RAN and the S-MM. For another example, if there is no association relationship between the T-RAN and the S-MM, it may be understood as that there is no link relationship between the T-RAN and the S-MM.

In S402, the S-MM determines whether the UE is to perform MM handover. If the S-MM determines that the UE is to perform MM handover, steps shown in S403 to S412 are performed. If the S-MM determines that the UE is not to perform MM handover, steps shown in S413 to S418 are performed.

S403: The S-MM sends a second message to an S-AM. Correspondingly, the S-AM receives the second message.

For example, the second message may be an MM handover notification message, used to request (or indicate) the UE to be handed over from the S-MM to a T-MM; or may be an MM handover request message, used to request the UE to perform MM handover; or is used to indicate the UE to be handed over from the S-RAN to the T-RAN; or is used to indicate the UE to prepare to be handed over from the S-RAN to the T-RAN. However, this is not limited in this embodiment of this application.

In an example, the second message is used to request the UE to be handed over from the S-MM to the T-MM. In this case, before S403, the S-MM may determine the T-MM. For example, the S-MM may determine the T-MM based on the first message. For example, the S-MM may determine, based on the information about the T-RAN, one or more MMs that have an association relationship with the T-RAN. When there is one MM that has an association relationship with the T-RAN, the S-MM may determine that the MM is the T-MM. When there are a plurality of MMs that have an association relationship with the T-RAN, the S-MM may select one MM from the plurality of MMs as the T-MM. For example, the S-MM may select one MM from the plurality of MMs as the T-MM based on a resource usage status of each of the plurality of MMs, a network congestion status, or the like. It should be understood that a specific implementation in which the S-MM selects one MM from the plurality of MMs as the T-MM is not limited in this embodiment of this application. In this example, the second message may include information corresponding to the T-MM, or include information corresponding to the T-RAN, or include information corresponding to the T-MM and information corresponding to the T-RAN. Optionally, the second message may further include identification information of the UE.

It should be noted that an MM locally maintains association relationship information. For example, the association relationship information may be configured by an operator, or may be obtained through interaction with a RAN, or may be obtained through interaction with another MM. This is not limited in this embodiment of this application. The association relationship information may include that the MM has an association relationship with one or more RANs. In this way, the S-MM may determine, based on association relationship information, whether the S-MM has an association relationship with the T-RAN. Optionally, the association relationship information may further include that another MM has an association relationship with one or more RANs. In this case, the S-MM may further determine, when determining that the S-MM has no association relationship with the T-RAN, the T-MM that has an association relationship with the T-RAN. Certainly, the S-MM may alternatively find or obtain, from another network element, for example, a network repository function (network repository function, NRF) network element, the T-MM that has an association relationship with the T-RAN. It should be understood that an implementation in which the S-MM determines the T-MM is not limited in this embodiment of this application.

The information corresponding to the T-MM may include but is not limited to one or more pieces of the following information: identification information of the T-MM, address information of the T-MM, information about a first network, or the like. The first network is a network to which the T-MM belongs. The information about the first network includes geographical location information of the first network, or includes geographical location information of a service provided by the first network, or includes geographical location information of the first network and geographical location information of a service provided by the first network. The geographical location information may be geographical coordinate information, for example, global positioning system (global positioning system, GPS) coordinates; or geographical range information; or information about a geographical location obtained through division by an operator, for example, a tracking area (tracking area, TA) identifier or a zone (zoom) identifier.

The information corresponding to the T-RAN may include but is not limited to one or more pieces of the following information: the identification information of the T-RAN, the address information of the T-RAN, location information of the T-RAN, or connection information (such as a port number) of the T-RAN.

In another example, the second message is used to request the UE to perform MM handover. In this case, the S-AM may determine the T-MM, and send a third message to the S-MM. The third message may be, for example, an MM handover response message, and includes information about the T-MM. The information about the T-MM includes the identification information of the T-MM, or includes the address information of the T-MM, or includes the identification information of the T-MM and the address information of the T-MM, or the like. Further, the S-MM may determine the T-MM based on the third message. In this example, the second message may include the information corresponding to the T-RAN. Optionally, the second message may further include the identification information of the UE.

For example, the S-AM may determine the T-MM based on the second message. For example, the S-AM may determine, based on the information corresponding to the T-RAN, one or more MMs that have an association relationship with the T-RAN. When there is one MM that has an association relationship with the T-RAN, the S-AM may determine that the MM is the T-MM. When there are a plurality of MMs that have an association relationship with the T-RAN, the SAM may select one MM from the plurality of MMs as the T-MM. For example, the S-AM may select one MM from the plurality of MMs as the T-MM based on a resource usage status of each of the plurality of MMs, a network congestion status, or the like. It should be understood that a specific implementation in which the S-AM selects one MM from the plurality of MMs as the T-MM is not limited in this embodiment of this application. In addition, for a specific implementation of obtaining the T-MM by the AM, refer to the foregoing related descriptions about determining the T-MM by the MM. Details are not described herein again.

For another example, the S-AM may receive a tenth message from the T-AM, and determine the T-MM based on the tenth message. The tenth message may be, for example, an MM handover response message, including the identification information of the T-MM, or including the address information of the T-MM, or including the identification information of the T-MM and the address information of the T-MM. Specifically, when the UE is to perform AM handover, the S-AM may send a ninth message to the T-AM, where the ninth message may be, for example, an MM handover request message, including the information corresponding to the T-RAN. The T-AM may determine the T-MM based on the received ninth message, and send the tenth message to the S-AM. For example, the T-AM may determine, based on the information corresponding to the T-RAN, one or more MMs that have an association relationship with the T-RAN. When there is one MM that has an association relationship with the T-RAN, the T-AM may determine that the MM is the T-MM. When there are a plurality of MMs that have an association relationship with the T-RAN, the T-AM may select one MM from the plurality of MMs as the T-MM. For example, the T-AM may select one MM from the plurality of MMs as the T-MM based on a resource usage status of each of the plurality of MMs, a network congestion status, or the like. It should be understood that a specific implementation in which the T-AM selects one MM from the plurality of MMs as the T-MM is not limited in this embodiment of this application.

In still another example, regardless of whether the second message is used to request the UE to be handed over from the S-MM to the T-MM or used to request the UE to perform MM handover, after receiving the second message, the S-MM may determine whether the UE is to perform MM handover, and determine the T-MM when determining that the UE is to perform MM handover. Alternatively, after receiving the second message, the S-AM sends the ninth message to the T-AM. After receiving the ninth message, the T-AM may determine whether the UE is to perform MM handover, and determine the T-MM when determining that the UE is to perform MM handover. For a specific implementation in which the S-AM (or the T-AM) determines whether the UE is to perform MM handover and determines the T-MM, refer to the foregoing descriptions. Details are not described herein again. In this example, the S-AM or the T-AM may determine whether the UE is to perform MM handover, and determine the T-MM when the UE is to perform MM handover, so that an appropriate T-MM can be selected for the UE. In this example, that the UE is to perform MM handover is used as an example.

S404: The S-AM sends a first response message to the S-MM. Correspondingly, the S-MM receives the first response message.

S404 is an optional step. The first response message may indicate that the UE is to perform MM handover, or indicate that the UE is allowed to perform MM handover. The S-AM may explicitly indicate, to the S-MM, that the UE is to perform MM handover, for example, the first response message is an acknowledgment (acknowledgment, ACK) message; or the S-AM may implicitly indicate, to the S-MM, that the UE is to perform MM handover, for example, the first response message includes the identification information of the T-MM, or includes the address information of the T-MM, or includes the identification information of the T-MM and the address information of the T-MM. This is not limited in this embodiment of this application. It should be understood that when the first response message includes the identification information of the T-MM and/or the address information of the T-MM, the first response message may be the third message in S403.

In a possible implementation, the S-AM may send a response message (or a feedback message) to the S-MM, where the response message indicates whether the S-AM (or the T-AM) allows the UE to perform MM handover, or indicates whether the S-AM (or the T-AM) allows handover to the T-MM, or indicates whether the S-AM (or the T-AM) allows the UE to perform MM handover and allows handover to the T-MM. For example, the S-AM (or the T-AM) allows the UE to perform MM handover and allows handover to the T-MM. The response message may be an ACK message. For another example, the S-AM (or the T-AM) does not allows the UE to perform MM handover, or the S-AM (or the T-AM) allows the UE to perform MM handover but does not allow handover to the T-MM. The response message may be a negative acknowledgment (negative acknowledgment, NACK) message. Certainly, the response message may alternatively give an indication implicitly. For example, the S-AM (or the T-AM) allows the UE to perform MM handover and allows handover to the T-MM. The response message may include the identification information of the T-MM and/or the address information of the T-MM. For another example, the S-AM (or the T-AM) does not allow the UE to perform MM handover, and the S-AM may not send a response message to the S-MM. For another example, the S-AM (or the T-AM) allows the UE to perform MM handover, but does not allow handover to the T-MM. The response message may include identification information of another MM and/or address information of the another MM, and the another MM is an MM other than the S-MM and the T-MM. In S404, an example in which the response message is the first response message is used. In the following S414, an example in which the response message is the second response message is used.

S405: The S-AM sends a sixth message to the T-MM. Correspondingly, the T-MM receives the sixth message.

For example, the sixth message may be an MM context create request message, and includes one or more of the identification information of the T-RAN, the address information of the T-RAN, or context information of the UE at the S-MM. Optionally, the sixth message may further include the identification information of the UE. Correspondingly, the T-MM receives the sixth message. Further, the T-MM may update, based on the sixth message, context information (not shown in FIG. 4) of the UE, for example, interface information of the T-RAN and session information. Optionally, the T-MM may send a response message corresponding to the sixth message to the S-AM. The response message corresponding to the sixth message may be, for example, an MM context create response message, and may indicate whether the update to the context information of the UE is completed or indicate whether the T-MM receives the sixth message.

S406: The T-MM establishes a connection with the T-RAN.

For example, the T-MM may establish the connection with the T-RAN based on the identification information of the T-RAN. For example, the T-MM may send, to the T-RAN, a request message used to request to establish a connection. Correspondingly, after receiving the request message, the T-RAN establishes the connection with the T-MM. In another example, the T-RAN may establish the connection with the T-MM based on the information about the T-MM. For example, the S-MM may send the information about the T-MM to the T-RAN. The T-RAN may send, to the T-MM based on the information about the T-MM, a request message used to request to establish a connection. Correspondingly, after receiving the request message, the T-MM establishes the connection with the T-RAN. It should be noted that a specific implementation process of establishing the connection between the T-MM and the T-RAN is not limited in this embodiment of this application.

In S406, establishment of the connection between the T-MM and the T-RAN may be triggered by the T-MM, or may be triggered by the T-RAN. The implementation is flexible and has strong adaptability.

S407: The S-AM determines whether the UE is to perform AM handover.

For example, the S-AM may determine, based on the second message, whether there is an association relationship (or a binding relationship) between the T-RAN and the S-AM, and determine, based on the association relationship, whether the UE is to perform AM handover. For example, if there is no association relationship between the T-RAN and the S-AM, the S-AM may determine that the UE is to perform AM handover. For another example, if there is an association relationship between the T-RAN and the S-AM, the S-AM may determine that the UE is not to perform AM handover. Specifically, the S-AM may determine, based on the information corresponding to the T-RAN, or based on the information corresponding to the T-MM, or based on the information corresponding to the T-RAN and the information corresponding to the T-MM, whether there is an association relationship between the T-RAN and the S-AM. For example, the S-AM may determine, based on the identification information of the T-RAN, the address information of the T-RAN, the network topology of the T-RAN, or the like, whether there is an association relationship between the S-AM and the T-RAN. Alternatively, the S-AM may determine, based on the information corresponding to the T-MM, whether there is an association relationship between the S-AM and the T-RAN. For example, if the T-MM and the T-RAN serve a same area, and there is a connection relationship between the S-AM and the T-MM, the S-AM may also have an association relationship with the T-RAN. Alternatively, the S-AM may determine, based on the information corresponding to the T-RAN and the information corresponding to the T-MM, whether there is an association relationship between the S-AM and the T-RAN. For a specific implementation, refer to the foregoing descriptions. Details are not described herein again.

In S407, the S-AM determines whether the UE is to perform AM handover. If the SAM determines that the UE is not to perform AM handover, steps shown in S408 and S409 are performed; or if the S-AM determines that the UE is to perform AM handover, steps shown in S410 to S412 are performed.

S408: The S-AM establishes a connection with the T-MM.

If the UE is not to perform AM handover, the S-AM may establish the connection with the T-MM.

In an example, the S-AM may establish the connection with the T-MM based on the information corresponding to the T-MM. For example, the S-AM may send an eleventh message to the T-MM, where the eleventh message is used to request to establish a connection between the S-AM and the T-MM. Correspondingly, after receiving the eleventh message, the T-MM establishes the connection with the S-AM.

In another example, the S-AM may send a fourth message to the S-MM, where the fourth message indicates that the UE is not to perform AM handover. The S-MM receives the fourth message, and sends a fifth message to the T-MM, where the fifth message includes information about the S-AM, for example, identification information of the S-AM and/or address information of the S-AM. The T-MM receives the fifth message, and sends the eleventh message to the S-AM, where the eleventh message is used to request to establish a connection between the S-AM and the T-MM. Correspondingly, after receiving the eleventh message, the T-MM establishes the connection with the S-AM. It should be understood that a message that is sent by the T-MM to the S-AM and that is used to request to establish the connection between the S-AM and the T-MM may be referred to as the eleventh message, or may be referred to as another message. This is not limited in this embodiment of this application.

In S408, establishment of the connection between the S-AM and the T-MM may be triggered by the S-AM, or may be triggered by the T-MM. The implementation is flexible and has strong adaptability.

S409: The S-AM establishes a connection with the T-RAN.

If the UE is not to perform AM handover, the S-AM may establish a connection with the T-RAN. For example, the S-AM may establish the connection with the T-RAN based on the identification information of the T-RAN. For example, the S-AM may send, to the T-RAN, a request message used to request to establish a connection. Correspondingly, after receiving the request message, the T-RAN establishes the connection with the S-AM. In another example, the MM (S-MM or T-MM) may send the information about the S-AM to the T-RAN. The T-RAN receives the information about the S-AM, and sends, to the S-AM based on the information about the S-AM, a request message used to request to establish a connection. Correspondingly, after receiving the request message, the S-AM establishes the connection with the T-RAN. It should be noted that a specific implementation process of establishing the connection between the S-AM and the T-RAN is not limited in this embodiment of this application. In S409, establishment of the connection between the S-AM and the T-RAN may be triggered by the S-AM, or may be triggered by the T-RAN. The implementation is flexible and has strong adaptability.

In a possible implementation, the S-AM may release a connection between the S-AM and the S-RAN. For example, the S-AM may send, to the S-RAN, a request message used to release a connection. Correspondingly, after receiving the request message, the S-RAN releases the connection between the S-RAN and the S-AM. It should be understood that a specific implementation process in which the S-AM releases the connection between the S-AM and the S-RAN is not limited in this embodiment of this application. In this implementation, the S-AM can release the connection between the S-AM and the S-RAN, thereby reducing a waste of network resources and improving network resource utilization.

S410: The S-AM sends an AM handover request message to the T-AM. Correspondingly, the T-AM receives the AM handover request message.

If the UE is to perform AM handover, the S-AM may send the AM handover request message to the T-AM. The AM handover request message may include the identification information of the T-RAN, or include the address information of the T-RAN, or include the identification information of the T-RAN and the address information of the T-RAN. For example, the S-AM may determine the T-AM, and then send the AM handover request message to the T-AM. For example, the S-AM may determine the T-AM based on the information corresponding to the T-RAN, or based on the information corresponding to the T-MM, or based on the information corresponding to the T-RAN and the information corresponding to the T-MM.

In an example, the S-AM may determine, based on the information corresponding to the T-RAN, one or more AMs that have an association relationship with the T-RAN. When there is one AM that has an association relationship with the T-RAN, the S-AM may determine that the AM is the T-AM. When there are a plurality of AMs that have an association relationship with the T-RAN, the S-AM may select one AM from the plurality of AMs as the T-AM. For example, the S-AM may select one AM from the plurality of AMs as the T-AM based on a resource usage status of each of the plurality of AMs, a network congestion status, or the like. It should be understood that a specific implementation in which the S-AM selects one AM from the plurality of AMs as the T-AM is not limited in this embodiment of this application.

In another example, the S-AM may determine the T-AM based on the information corresponding to the T-MM. For example, the S-AM may select a corresponding T-AM based on a domain in which the T-MM is located (for example, T-MM set (set) information or information about a geographical area served by the T-MM). For example, the S-AM may select a T-AM corresponding to the domain in which the T-MM is located, or a T-AM matching the geographical area served by the T-MM. It should be understood that a specific implementation in which the SAM determines the T-AM is not limited in this embodiment of this application.

In still another example, the S-AM may determine the T-AM based on the information corresponding to the T-RAN and the information corresponding to the T-MM. For a specific implementation, refer to the foregoing descriptions. Details are not described herein again.

S411: The T-AM establishes a connection with the T-MM.

If the UE is to perform AM handover, the T-AM may establish the connection with the T-MM.

In an example, the T-AM may establish the connection with the T-MM based on the information corresponding to the T-MM. For example, the T-AM may send a twelfth message to the T-MM, where the twelfth message is used to request to establish a connection between the T-AM and the T-MM. Correspondingly, after receiving the twelfth message, the T-MM establishes the connection with the T-AM.

In another example, the S-AM may send a fourth message to the S-MM, where the fourth message indicates that the UE is to perform AM handover. The S-MM receives the fourth message, and sends a fifth message to the T-MM, where the fifth message includes the information about the T-AM, for example, the identification information of the T-AM and/or the address information of the T-AM. The T-MM receives the fifth message, and sends the twelfth message to the T-AM, where the twelfth message is used to request to establish a connection between the T-AM and the T-MM. Correspondingly, after receiving the eleventh message, the T-AM establishes the connection with the T-MM. In this example, the fourth message may include the information about the T-AM. It should be understood that a message that is sent by the T-MM to the T-AM and that is used to request to establish a connection between the T-AM and the T-MM may be referred to as the twelfth message, or may be referred to as another message. This is not limited in this embodiment of this application.

In S411, establishment of the connection between the T-AM and the T-MM may be triggered by the T-AM, or may be triggered by the T-MM. The implementation is flexible and has strong adaptability.

S412: The T-AM establishes a connection with the T-RAN.

If the UE is to perform AM handover, the T-AM may establish the connection with the T-RAN. For example, the T-AM may establish the connection with the T-RAN based on the identification information of the T-RAN. For example, the T-AM may send, to the T-RAN, a request message used to request to establish a connection. Correspondingly, after receiving the request message, the T-RAN establishes the connection with the T-AM. In another example, the T-RAN may establish the connection with the T-AM based on the information about the T-AM. For example, the MM (S-MM or T-MM) may send the information about the T-AM to the T-RAN; the T-RAN receives the information about the T-AM, and sends, to the T-AM based on the information about the T-AM, a request message used to request to establish a connection; and correspondingly, after receiving the request message, the T-AM establishes the connection with the T-RAN. It should be noted that a specific implementation process of establishing the connection between the T-AM and the T-RAN is not limited in this embodiment of this application. In S412, establishment of the connection between the T-AM and the T-RAN may be triggered by the T-AM, or may be triggered by the T-RAN. The implementation is flexible and has strong adaptability.

The foregoing S403 to S412 are implementations in which the UE is to perform MM handover. The following describes implementations in which the UE is not to perform MM handover.

S413: The S-MM sends a seventh message to the S-AM. Correspondingly, the S-AM receives the seventh message.

If the UE is not to perform MM handover, the S-MM may send the seventh message to the S-AM. The seventh message may be, for example, a handover request (or notification) message, and may be used to request the UE not to perform MM handover, or may indicate the UE to be handed over from the S-RAN to the T-RAN, or may indicate the UE to prepare to be handed over from the S-RAN to the T-RAN. The seventh message may include the information corresponding to the T-RAN. Optionally, the seventh message may further include the identification information of the UE.

In a possible implementation, after receiving the seventh message, the S-AM may determine whether the UE is to perform MM handover, and determine the T-MM when determining that the UE is to perform MM handover. Alternatively, after receiving the seventh message, the S-AM may forward the seventh message to the T-AM. After receiving the seventh message, the T-AM may determine whether the UE is to perform MM handover, and determine the T-MM when determining that the UE is to perform MM handover. For a specific implementation in which the S-AM (or the T-AM) determines whether the UE is to perform MM handover and determines the T-MM, refer to related descriptions of S402 and S403. Details are not described herein again. In S413, an example in which the AM (S-AM or T-AM) determines that the UE is not to perform MM handover is used.

S414: The S-AM sends a second response message to the S-MM. Correspondingly, the S-MM receives the second response message.

S414 is an optional step. The second response message may indicate that the UE is not to perform MM handover, or indicate that the UE is not allowed to perform MM handover. The SAM may explicitly indicate, to the S-MM, that the UE is not to perform MM handover, for example, the first response message is a NACK message. Alternatively, the S-AM may implicitly indicate, to the S-MM, that the UE is not to perform MM handover, for example, the S-AM does not send the second response message to the S-MM. This is not limited in this embodiment of this application.

S415: The S-MM establishes a connection with the T-RAN.

If the UE is not to perform MM handover, the S-MM may establish the connection with the T-RAN. For example, the S-MM may establish the connection with the T-RAN based on the identification information of the T-RAN. For example, the S-MM may send, to the T-RAN, a request message used to request to establish a connection. Correspondingly, after receiving the request message, the T-RAN establishes the connection with the S-MM. It should be noted that a specific implementation process of establishing the connection between the S-MM and the T-RAN is not limited in this embodiment of this application.

In a possible implementation, the S-MM may release a connection between the S-MM and the S-RAN. For example, the S-MM may send, to the S-RAN, a request message used to release a connection. Correspondingly, after receiving the request message, the S-RAN releases the connection between the S-RAN and the S-MM. It should be understood that a specific implementation process in which the S-MM releases the connection between the S-MM and the S-RAN is not limited in this embodiment of this application. In this implementation, the S-MM can release the connection between the S-MM and the S-RAN, thereby reducing a waste of network resources and improving network resource utilization.

S416: The S-AM sends an AM handover request message to the T-AM. Correspondingly, the T-AM receives the AM handover request message.

For a specific implementation of S416, refer to the description of S410. Details are not described herein again.

S417: The T-AM establishes a connection with the S-MM.

The UE is not to perform MM handover but is to perform AM handover. In this case, the T-AM may establish the connection with the S-MM.

In an example, the T-AM may establish the connection with the S-MM based on information about the S-MM (for example, identification information of the S-MM and/or address information of the S-MM). For example, the T-AM may send an eighth message to the T-MM, where the eighth message is used to request to establish a connection between the T-AM and the S-MM. Correspondingly, after receiving the eighth message, the S-MM establishes the connection with the T-AM.

In another example, the S-AM may send a fourth message to the S-MM, where the fourth message indicates that the UE is to perform AM handover. The S-MM receives the fourth message, and may send the eighth message to the T-AM, where the eighth message is used to request to establish a connection between the T-AM and the S-MM. Correspondingly, after receiving the eighth message, the T-AM establishes the connection with the S-MM. In this example, the fourth message may include the information about the T-AM. It should be understood that a message that is sent by the S-MM to the T-AM and that is used to request to establish a connection between the T-AM and the S-MM may be referred to as the eighth message, or may be referred to as another message. This is not limited in this embodiment of this application.

In S417, establishment of the connection between the T-AM and the S-MM may be triggered by the T-AM, or may be triggered by the S-MM. The implementation is flexible and has strong adaptability.

S418: The T-AM establishes a connection with the T-RAN.

For a specific implementation of S418, refer to the description of S412. Details are not described herein again.

In an example, the S-MM may send, to the S-RAN, a response message corresponding to the first message. The response message corresponding to the first message may be, for example, a handover response message. The response message corresponding to the first message may indicate whether the S-MM receives the first message. In this embodiment of this application, an example in which the response message corresponding to the first message indicates that the S-MM receives the first message is used. For example, the S-MM may send, to the S-RAN after S401 and before S402, the response message corresponding to the first message; or the S-MM may send, to the S-RAN after S402, the response message corresponding to the first message. An execution sequence of sending, by the S-MM, the response message corresponding to the first message is not limited in this embodiment of this application. In this example, the S-RAN may determine whether the S-MM successfully receives the first message.

In still another example, air interface handover may be performed between the S-RAN, the T-RAN, and the UE, to complete RAN handover (or complete air interface handover) of the UE. For example, after receiving the response message corresponding to the first message, the S-RAN may trigger air interface handover between the S-RAN, the T-RAN, and the UE; or before sending the first message to the S-MM, the S-RAN may trigger air interface handover between the S-RAN, the T-RAN, and the UE. It should be understood that an execution sequence and a specific implementation of air interface handover between the S-RAN, the T-RAN, and the UE are not limited in this embodiment of this application.

Further, the T-RAN may send a RAN handover complete message to the MM, where the RAN handover complete message indicates that the UE completes RAN handover or indicates that the UE completes air interface handover. For example, the UE does not perform MM handover, and the T-RAN may send the RAN handover complete message to the S-MM. For another example, the UE performs MM handover and is handed over to the T-MM, and the T-RAN may send the RAN handover complete message to the T-MM. Further, after receiving the RAN handover complete message, the T-MM may send the RAN handover complete message to the S-MM. In this way, the MM can learn that the UE completes RAN handover or air interface handover.

In still another example, after receiving the RAN handover complete message, the T-MM may send the RAN handover complete message to the AM. For example, the UE does not perform AM handover, and the T-MM may send the RAN handover complete message to the SAM. For another example, the UE performs AM handover and is handed over to the T-AM, and the T-MM may send the RAN handover complete message to the T-AM. Similarly, after receiving the RAN handover complete message, the S-MM may send the RAN handover complete message to the T-AM. In this example, the AM can learn that the UE completes RAN handover or air interface handover.

It should be noted that an execution sequence of the steps in FIG. 4 is merely an example. This is not limited in this embodiment of this application. For example, after sending the first response message to the S-MM, the S-AM may determine whether the UE is to perform AM handover; or before sending the first response message to the S-MM, the S-AM may determine whether the UE is to perform AM handover, for example, after receiving the second message, the S-AM determines whether the UE is to perform AM handover. For another example, the T-MM may establish the connection with the T-RAN before the S-AM determines whether the UE is to perform AM handover, or after the S-AM determines whether the UE is to perform AM handover. For another example, the S-MM may send the sixth message to the T-MM before the S-AM determines whether the UE is to perform AM handover. Alternatively, the S-MM sends the sixth message to the T-MM after the S-MM determines whether the UE is to perform AM handover; and in this case, the sixth message may further include AM information (for example, the information about the S-AM or the information about the T-AM), so that the T-MM updates AM information in the context information of the UE. For example, the UE does not perform AM handover, and the sixth message includes the information about the S-AM; or the UE performs AM handover, and the sixth message includes the information about the T-AM.

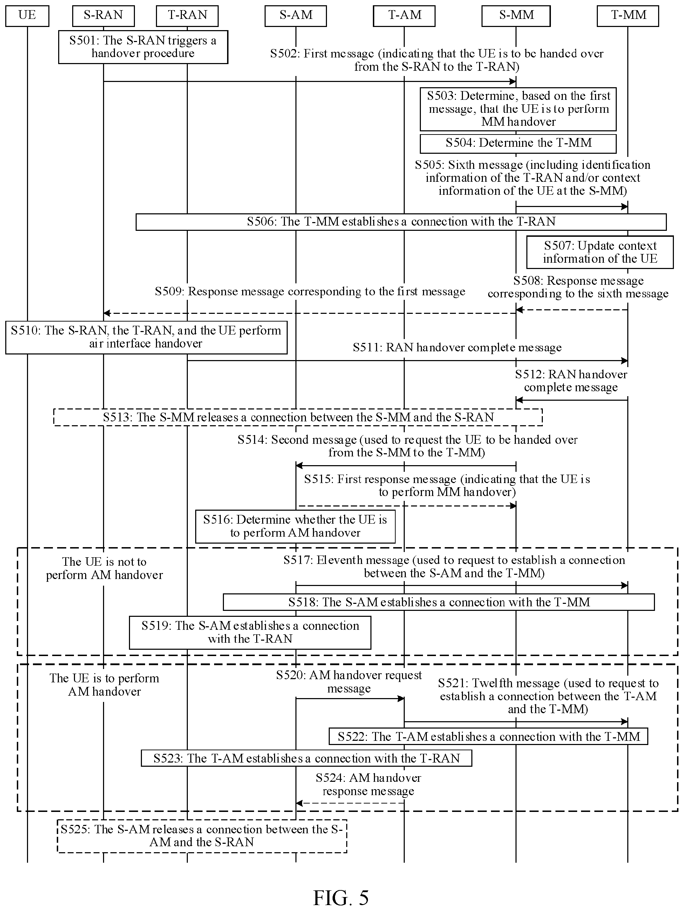

The following describes the steps shown in FIG. 4 in detail with reference to FIG. 5, FIG. 6, FIG. 7, and FIG. 8.

FIG. 5 is another schematic flowchart of a communication method according to an embodiment of this application. In this embodiment, UE is to perform MM handover, a T-MM is determined by an S-MM, and an AM initiates establishment of a connection between the AM and the T-MM.

S501: An S-RAN triggers a handover procedure.

For example, in a process of communication between the UE and the S-RAN, the S-RAN receives measurement information reported by the UE, and determines, based on the measurement information, that signal strength of other RANs is higher than signal strength of the S-RAN, or signal strength of other RANs is higher than a handover threshold, or signal strength of other RANs is higher than signal strength of the S-RAN and the signal strength of the other RANs is higher than a handover threshold. In this case, the S-RAN triggers the handover procedure.

S502: The S-RAN sends a first message to the S-MM. Correspondingly, the S-MM receives the first message.

The first message may be, for example, a handover request message. However, this is not limited in this embodiment of this application. The first message may indicate that the UE is to be handed over from the S-RAN to a T-RAN, or indicate that the UE prepares to be handed over from the S-RAN to the T-RAN. The first message may include information about the T-RAN. For a specific implementation process of S502, refer to related descriptions of S401. Details are not described herein again.

S503: The S-MM determines, based on the first message, that the UE is to perform MM handover.

For example, the S-MM may determine, based on the first message, whether there is an association relationship between the T-RAN and the S-MM, and determine, based on the association relationship, whether the UE is to perform MM handover. In this embodiment, there is an association relationship between the S-MM and the T-RAN, and the S-MM may determine that the UE is to perform MM handover. For a specific implementation process of S503, refer to related descriptions of S402. Details are not described herein again.

S504: The S-MM determines the T-MM.

For example, the S-MM may determine the T-MM based on the first message. For example, the S-MM may determine, based on the information about the T-RAN, one or more MMs that have an association relationship with the T-RAN. When there is one MM that has an association relationship with the T-RAN, the S-MM may determine that the MM is the T-MM. When there are a plurality of MMs that have an association relationship with the T-RAN, the S-MM may select one MM from the plurality of MMs as the T-MM. For example, the S-MM may select one MM from the plurality of MMs as the T-MM based on a resource usage status of each of the plurality of MMs, a network congestion status, or the like. For a specific implementation process of S504, refer to related descriptions of S403. Details are not described herein again.

S505: The S-MM sends a sixth message to the T-MM. Correspondingly, the T-MM receives the sixth message.

For example, the sixth message may be an MM context create request message, and includes identification information of the T-RAN, or includes context information of the UE at the S-MM, or includes identification information of the T-RAN and context information of the UE at the S-MM. For a specific implementation process of S505, refer to related descriptions of S405. Details are not described herein again.

S506: The T-MM establishes a connection with the T-RAN.

For a specific implementation process of S506, refer to related descriptions of S406. Details are not described herein again.

S507: The T-MM updates context information of the UE.

In this embodiment, the T-MM may update the context information of the UE, for example, update RAN-related information in the context information of the UE based on the information about the T-RAN, and/or update MM-related information in the context information of the UE. It should be understood that the T-MM may update the context information of the UE one or more times. For example, the UE is not to perform AM handover, and the T-MM may further update AM-related information in the context information of the UE based on information about the S-AM. For another example, the UE is to perform AM handover, and the T-MM may further update AM-related information in the context information of the UE based on information about the T-AM.

S508: The T-MM sends a response message corresponding to the sixth message to the S-MM. Correspondingly, the S-MM receives the response message corresponding to the sixth message.

Optionally, the T-MM may send the response message corresponding to the sixth message to the S-AM. The response message corresponding to the sixth message may be, for example, an MM context create response message, and may indicate whether the update to the context information of the UE is completed or indicate whether the T-MM receives the sixth message. In this embodiment, that the T-MM receives the sixth message is used as an example.

S509: The S-MM sends a response message corresponding to the first message to the S-RAN. Correspondingly, the S-RAN receives the response message corresponding to the first message.

Optionally, the S-MM may send the response message corresponding to the first message to the S-RAN, to indicate whether the S-MM receives the first message. In this embodiment, that the S-MM receives the first message is used as an example.

S510: The S-RAN, the T-RAN, and the UE perform air interface handover.

The S-RAN, the T-RAN, and the UE perform air interface handover, to complete RAN handover or complete air interface handover.

S511: The T-RAN sends a RAN handover complete message to the T-MM. Correspondingly, the T-MM receives the RAN handover complete message. The RAN handover complete message may indicate that the UE completes RAN handover or the UE completes air interface handover.

S512: The T-MM sends the RAN handover complete message to the S-MM. Correspondingly, the S-MM receives the RAN handover complete message.

S513: The S-MM releases a connection between the S-MM and the S-RAN.

Optionally, the S-MM may release the connection between the S-MM and the S-RAN. For example, the S-MM may send, to the S-RAN, a request message used to request to release a connection. Correspondingly, after receiving the request message, the S-RAN releases the connection between the S-RAN and the S-MM.

S514: The S-MM sends a second message to the S-AM. Correspondingly, the S-AM receives the second message.

In this embodiment, the second message may be used to request (or indicate) the UE to be handed over from the S-MM to the T-MM, or may be an MM handover request message.

S515: The S-AM sends a first response message to the S-MM. Correspondingly, the S-MM receives the first response message.

Optionally, the S-AM may send the first response message to the S-MM. For a specific implementation process of S515, refer to S404. Details are not described herein again.

S516: The S-AM determines whether AM handover is to be performed.

For example, the S-AM may determine whether there is an association relationship (or a binding relationship) between the T-RAN and the S-AM, and determine, based on the association relationship, whether the UE is to perform AM handover. For example, there is no association relationship between the T-RAN and the S-AM, and the S-AM may determine that the UE is to perform AM handover. For another example, if there is an association relationship between the T-RAN and the S-AM, the S-AM may determine that the UE is not to perform AM handover.

In S516, the S-AM determines whether the UE is to perform AM handover. If the SAM determines that the UE is not to perform AM handover, steps shown in S517 to S519 are performed. If the S-AM determines that the UE is to perform AM handover, steps shown in S520 to S524 are performed.

S517: The S-AM sends an eleventh message to the T-MM. Correspondingly, the T-MM receives the eleventh message.

If the UE is not to perform AM handover, the S-AM may send the eleventh message to the T-MM. The eleventh message may be used to request to establish a connection between the SAM and the T-MM.

S518: The S-AM establishes the connection with the T-MM.

The T-MM establishes the connection with the S-AM in response to the eleventh message. A specific implementation process of establishing the connection between the S-AM and the T-MM is not limited in this embodiment of this application.

S519: The S-AM establishes a connection with the T-RAN.

In this embodiment, the S-AM may send, to the T-RAN, a request message used to request to establish a connection. Correspondingly, after receiving the request message, the T-RAN establishes the connection with the S-AM. A specific implementation process of establishing the connection between the S-AM and the T-RAN is not limited in this embodiment of this application.

S520: The S-AM sends an AM handover request message to the T-AM. Correspondingly, the T-AM receives the AM handover request message.

If the UE is to perform AM handover, the S-AM may send the AM handover request message to the T-AM. The AM handover request message may include the identification information of the T-RAN, or include address information of the T-RAN, or include the identification information of the T-RAN and address information of the T-RAN. For example, the S-AM may determine the T-AM, and then send the AM handover request message to the T-AM. For example, the S-AM may determine the T-AM based on information corresponding to the T-RAN, or based on information corresponding to the T-MM, or based on information corresponding to the T-RAN and information corresponding to the T-MM. For a specific implementation process of S520, refer to S410. Details are not described herein again.

S521: The T-AM sends a twelfth message to the T-MM. Correspondingly, the T-MM receives the twelfth message.

If the UE is to perform AM handover, the T-AM may send the twelfth message to the T-MM. The twelfth message may be used to request to establish a connection between the T-AM and the T-MM.

S522: The T-AM establishes the connection with the T-MM.

The T-MM establishes the connection with the T-AM in response to the twelfth message. A specific implementation process of establishing the connection between the T-AM and the T-MM is not limited in this embodiment of this application.

S523: The T-AM establishes a connection with the T-RAN.

In this embodiment, the T-AM may send, to the T-RAN, a request message used to request to establish a connection. Correspondingly, after receiving the request message, the T-RAN establishes the connection with the T-AM. A specific implementation process of establishing the connection between the T-AM and the T-RAN is not limited in this embodiment of this application.

S524: The T-AM sends an AM handover response message to the S-AM. Correspondingly, the S-AM receives the AM handover response message.

Optionally, the T-AM may send the AM handover response message to the S-AM. The AM handover response message may indicate that AM handover of the UE is completed.

S525: The S-AM releases a connection between the S-AM and the S-RAN.

Optionally, the S-AM may release the connection between the S-AM and the S-RAN. For example, the S-AM may send, to the S-RAN, a request message used to request to release a connection. Correspondingly, after receiving the request message, the S-RAN releases the connection between the S-RAN and the S-AM.

It should be noted that an execution sequence of the steps in FIG. 5 is merely an example. This is not limited in this embodiment of this application. For example, the S-MM may send the second message to the S-AM after the S-MM releases the connection between the S-MM and the S-RAN, or may send the second message to the S-AM before the S-MM releases the connection between the S-MM and the S-RAN, for example, the S-MM sends the second message to the S-AM after determining the T-MM. For another example, the S-AM may first establish the connection with the T-MM, and then establish the connection with the T-RAN; or may first establish the connection with the T-RAN, and then establish the connection with the T-MM; or may establish the connections with the T-MM and the T-RAN at the same time. For another example, the T-AM may first establish the connection with the T-MM, and then establish the connection with the T-RAN; or may first establish the connection with the T-RAN, and then establish the connection with the T-MM; or may establish the connections with the T-MM and the T-RAN at the same time.

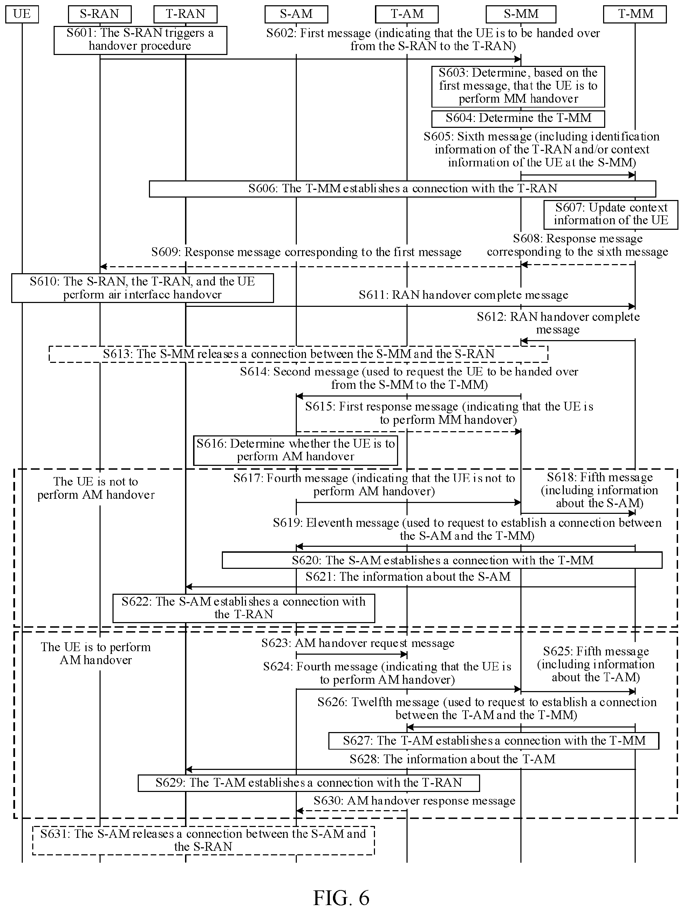

FIG. 6 is another schematic flowchart of a communication method according to an embodiment of this application. In this embodiment, UE is to perform MM handover, a T-MM is determined by an S-MM, and the T-MM initiates establishment of a connection between an AM and the T-MM.

S601 to S616, S620, S622, S623, S627, and S629 to S631 in FIG. 6 are respectively the same as S501 to S516, S518, S519, S520, S522, and S523 to S525 in FIG. 5. Differences are as follows:
S617: The S-AM sends a fourth message to the S-MM. Correspondingly, the S-MM receives the fourth message.
   If the UE is not to perform AM handover, the S-AM may send the fourth message to the S-MM. The fourth message may indicate that the UE is not to perform AM handover.
S618: The S-MM sends a fifth message to the T-MM. Correspondingly, the T-MM receives the fifth message.
   If the UE is not to perform AM handover, the S-MM may send the fifth message to the T-MM after receiving the fourth message. The fifth message includes information about the S-AM.
S619: The T-MM sends an eleventh message to the S-AM. Correspondingly, the S-AM receives the eleventh message.
   If the UE is not to perform AM handover, the T-MM may send the eleventh message to the S-AM, where the eleventh message is used to request to establish a connection between the T-MM and the S-AM. For example, the T-MM may send the eleventh message to the S-AM based on the information about the S-AM.
S621: The T-MM sends the information about the S-AM to the T-RAN. Correspondingly, the T-RAN receives the information about the S-AM.
   In this embodiment, the UE is not to perform AM handover, and the T-MM may send the information about the S-AM to the T-RAN. In this way, the T-RAN may trigger establishment of a connection between the T-RAN and the S-AM based on the information about the S-AM.
S624: The S-AM sends a fourth message to the S-MM. Correspondingly, the S-MM receives the fourth message.
   If the UE is to perform AM handover, the S-AM may send the fourth message to the S-MM, where the fourth message may indicate that the UE is to perform AM handover. Optionally, the fourth message may include information about the T-AM.
S625: The S-MM sends a fifth message to the T-MM. Correspondingly, the T-MM receives the fifth message.
   If the UE is to perform AM handover, the S-MM may send the fifth message to the T-MM after receiving the fourth message. The fifth message includes the information about the T-AM.
S626: The T-MM sends a twelfth message to the S-AM. Correspondingly, the S-AM receives the twelfth message.
   If the UE is to perform AM handover, the T-MM may send the twelfth message to the T-AM. The twelfth message is used to request to establish a connection between the T-MM and the T-AM. For example, the T-MM may send the twelfth message to the T-AM based on the information about the T-AM.
S628: The T-MM sends the information about the T-AM to the T-RAN. Correspondingly, the T-RAN receives the information about the T-AM.

In this embodiment, the UE is to perform AM handover, and the T-MM may send the information about the T-AM to the T-RAN. In this way, the T-RAN may trigger establishment of a connection between the T-RAN and the T-AM based on the information about the T-AM.

It should be noted that an execution sequence of the steps in FIG. 6 is merely an example. This is not limited in this embodiment of this application. For example, the S-MM may release a connection between the S-MM and the S-RAN before sending the second message to the S-AM or after sending the second message to the S-AM. For another example, the T-MM may update context information of the UE before the S-AM determines whether the UE is to perform AM handover, or may update context information of the UE after the S-AM determines whether the UE is to perform AM handover.

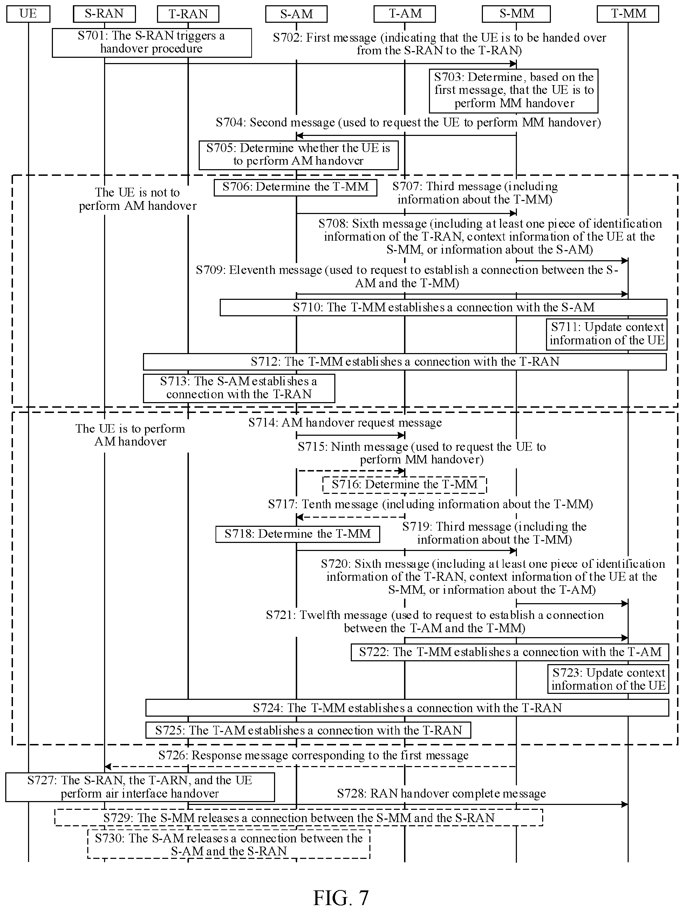

FIG. 7 is another schematic flowchart of a communication method according to an embodiment of this application. In this embodiment, UE is to perform MM handover, a T-MM is determined by an AM, and the AM initiates establishment of a connection between the AM and the T-MM.

In FIG. 7, implementation processes of S707, S711, and S712 when the UE is not to perform AM handover are the same as those of S719, S723, and S724 when the UE is to perform AM handover. S701 to S703, S705, S709, S710, S711, S712, S713, S714, S721, S722, S725, S726, S727, S728, S729, and S730 in FIG. 7 are respectively the same as S501 to S503, S516, S517, S518, S507, S506, S519, S520, S521, S522, S523, S509, S510, S511, S513, and S525 in FIG. 5. Differences are as follows:
S704: The S-MM sends a second message to the S-AM. Correspondingly, the S-AM receives the second message.

In this embodiment, the second message may be used to request the UE to perform MM handover, or used to indicate the UE to be handed over from the S-RAN to the T-RAN. For a specific implementation process of S704, refer to related content of S403. Details are not described herein again.

S706: The S-AM determines the T-MM.

If the UE is not to perform AM handover, the S-AM may determine the T-MM in response to the second message. For example, the S-AM may determine, based on information corresponding to the T-RAN, one or more MMs that have an association relationship with the T-RAN. When there is one MM that has an association relationship with the T-RAN, the S-AM may determine that the MM is the T-MM. When there are a plurality of MMs that have an association relationship with the T-RAN, the S-AM may select one MM from the plurality of MMs as the T-MM. For example, the S-AM may select one MM from the plurality of MMs as the T-MM based on a resource usage status of each of the plurality of MMs, a network congestion status, or the like. It should be understood that a specific implementation in which the S-AM selects one MM from the plurality of MMs as the T-MM is not limited in this embodiment of this application.

S707: The S-AM sends a third message to the S-MM. Correspondingly, the S-MM receives the third message.

The third message includes information about the T-MM, and the information about the T-MM includes identification information of the T-MM and/or address information of the T-MM.

S708: The S-MM sends a sixth message to the T-MM. Correspondingly, the T-MM receives the sixth message.

The UE is not to perform AM handover, and the sixth message may include at least one piece of identification information of the T-RAN, context information of the UE at the S-MM, or information about the S-AM. In this way, the T-MM may update at least one piece of MM-related information, RAN-related information, or AM-related information in context information of the UE.

S715: The S-AM sends a ninth message to the T-AM. Correspondingly, the T-AM receives the ninth message.

Optionally, the UE is to perform AM handover, and the S-AM may send the ninth message to the T-AM, where the ninth message is used to request the UE to perform MM handover.

S716: The T-AM determines the T-MM.

Optionally, the UE is to perform AM handover, and the T-AM determines the T-MM in response to the ninth message. For example, the T-AM may determine, based on the information corresponding to the T-RAN, one or more MMs that have an association relationship with the T-RAN. When there is one MM that has an association relationship with the T-RAN, the T-AM may determine that the MM is the T-MM. When there are a plurality of MMs that have an association relationship with the T-RAN, the T-AM may select one MM from the plurality of MMs as the T-MM. For example, the T-AM may select one MM from the plurality of MMs as the T-MM based on a resource usage status of each of the plurality of MMs, a network congestion status, or the like. It should be understood that a specific implementation in which the T-AM selects one MM from the plurality of MMs as the T-MM is not limited in this embodiment of this application.

S717: The T-AM sends a tenth message to the S-AM. Correspondingly, the S-AM receives the tenth message.

Optionally, the UE is to perform AM handover, and the T-AM may send the tenth message to the S-AM, where the tenth message includes the information about the T-MM.

S718: The S-AM determines the T-MM.

In this embodiment, the UE is to perform AM handover, and the S-AM may determine the T-MM by itself. For a specific implementation process, refer to S706. Alternatively, the T-MM may be determined based on the tenth message.

S719: The S-AM sends a third message to the S-MM. Correspondingly, the S-MM receives the third message.

For a specific implementation process of S719, refer to S707. Details are not described herein again.

S720: The S-MM sends a sixth message to the T-MM. Correspondingly, the T-MM receives the sixth message.

The UE is to perform AM handover, and the sixth message may include at least one piece of the identification information of the T-RAN, the context information of the UE at the S-MM, or information about the T-AM. In this way, the T-MM may update at least one piece of MM-related information, RAN-related information, or AM-related information in context information of the UE.

It should be noted that an execution sequence of the steps in FIG. 7 is merely an example. This is not limited in this embodiment of this application. For example, air interface handover between the S-RAN, the T-RAN, and the UE may be performed after the S-AM determines whether the UE is to perform AM handover, or may be performed before the S-AM determines that the UE is to perform AM handover. For another example, the T-RAN may first establish a connection with the T-MM, and then establish a connection with the T-AM; or the T-RAN may first establish a connection with the T-AM, and then establish a connection with the T-MM; or the T-RAN may establish connections with the T-MM and the T-AM at the same time.

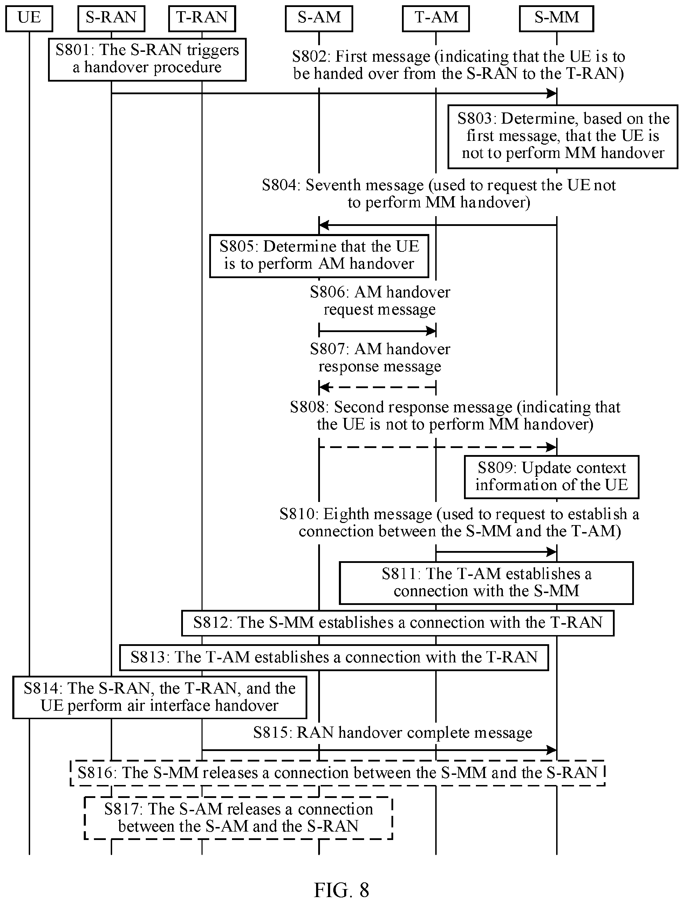

FIG. 8 is still another schematic flowchart of a communication method according to an embodiment of this application. In this embodiment, UE is not to perform MM handover, the UE is to perform AM handover, and a T-AM initiates establishment of a connection between the T-AM and an S-MM.

S801, S802, S806, S807, S813, S814, S816, and S817 in FIG. 8 are respectively the same as S501, S502, S520, S524, S523, S510, S513, and S525 in FIG. 5. Differences are as follows:
S803: The S-MM determines, based on the first message, that the UE is not to perform MM handover.
   For example, the S-MM may determine, based on the first message, whether there is an association relationship (or a binding relationship) between the T-RAN and the S-MM, and determine, based on the association relationship, whether the UE is to perform MM handover. In this embodiment, the S-MM determines, based on the first message, that the UE is not to perform MM handover. For a specific implementation process of S803, refer to S402. Details are not described herein again.
S804: The S-MM sends a seventh message to the S-AM. Correspondingly, the S-AM receives the seventh message.
   If the UE is not to perform MM handover, the S-MM may send the seventh message to the S-AM. The seventh message may be, for example, a handover request (or notification) message, and may be used to request the UE not to perform MM handover, or may indicate the UE to be handed over from the S-RAN to the T-RAN, or may indicate the UE to prepare to be handed over from the S-RAN to the T-RAN. In FIG. 8, an example in which the seventh message is used to request the UE not to perform MM handover is used. For a specific implementation process of S804, refer to S413. Details are not described herein again.
S805: The S-AM determines that the UE is to perform AM handover.
   The UE is not to perform MM handover, and the S-AM may determine that the UE is to perform AM handover. For example, the S-AM may determine whether there is an association relationship between the T-RAN and the S-AM, and determine, based on the association relationship, whether the UE is to perform AM handover. In this embodiment, there is no association relationship between the T-RAN and the S-AM, and the S-AM may determine that the UE is to perform AM handover.
S808: The S-AM sends a second response message to the S-MM. Correspondingly, the S-MM receives the second response message.
   Optionally, the S-AM may send the second response message to the S-MM, where the second response message may indicate that the UE is not to perform MM handover, or indicate that the UE is not allowed to perform MM handover. For a specific implementation process of S808, refer to S414. Details are not described herein again.
S809: The S-MM updates context information of the UE.
   In S809, the S-MM may update the context information of the UE. For example, the S-MM may update RAN-related information and/or AM-related information in the context information of the UE.
S810: The T-AM sends an eighth message to the S-MM. Correspondingly, the S-MM receives the eighth message.
   The eighth message may be used to request to establish a connection between the T-AM and the S-MM.
S811: The T-AM establishes a connection with the S-MM.
   If the UE is not to perform MM handover, the T-AM establishes the connection with the S-MM in response to the eighth message. It should be understood that a specific implementation process of establishing the connection between the T-AM and the S-MM is not limited in this embodiment of this application.
S812: The S-MM establishes a connection with the T-RAN.
   If the UE is not to perform MM handover, the S-MM may establish the connection with the T-RAN. For a specific implementation process, refer to S415. It should be understood that a specific implementation process of establishing the connection between the T-AM and the S-MM is not limited in this embodiment of this application.
S815: The T-RAN sends a RAN handover complete message to the S-MM. Correspondingly, the S-MM receives the RAN handover complete message.

After air interface handover between the S-RAN, the T-RAN, and the UE is completed, the T-RAN may send the RAN handover complete message to the S-MM, to indicate that RAN handover of the UE or air interface handover is completed. Optionally, after receiving the RAN handover complete message, the S-MM may send the RAN handover complete message to the SAM and/or the T-AM, so that the AM can learn that the UE completes RAN handover or air interface handover.

It should be noted that an execution sequence of the steps in FIG. 8 is merely an example. This is not limited in this embodiment of this application. For example, the S-MM may update the context information of the UE before receiving the eighth message, or may update the context information of the UE after the S-MM establishes the connection with the T-AM. For another example, the T-RAN may first establish the connection with the S-MM, and then establish a connection with the T-AM; or the T-RAN may first establish a connection with the T-AM, and then establish the connection with the S-MM; or the T-RAN may establish connections with the S-MM and the T-AM at the same time.

In the foregoing embodiments provided in this application, the methods provided in embodiments of this application are separately described from a perspective of interaction between the first mobility management function network element, the second mobility management function network element, the first access management function network element, and the second access management function network element. To implement the functions in the methods provided in embodiments of this application, the first mobility management function network element, the second mobility management function network element, the first access management function network element, or the second access management function network element may include a hardware structure and/or a software module, and the foregoing functions are implemented in a form of a hardware structure, a software module, or a combination of a hardware structure and a software module.

The following describes, with reference to the accompanying drawings, communication apparatuses configured to implement the foregoing methods in embodiments of this application. Therefore, all the foregoing content may be used in the following embodiments. Repeated content is not described again.

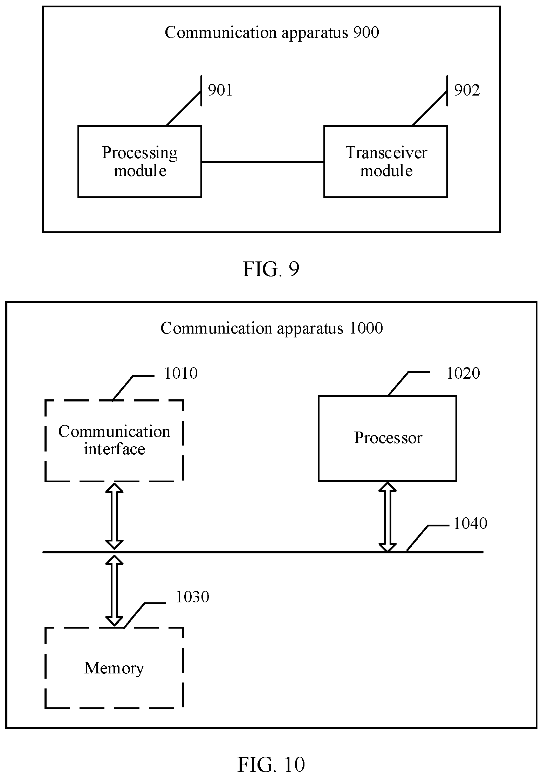

FIG. 9 is a diagram of a structure of a communication apparatus 900. The communication apparatus 900 may correspondingly implement functions or steps implemented by the first mobility management function network element, the second mobility management function network element, the first access management function network element, or the second access management function network element in the foregoing method embodiments. The communication apparatus may include a processing module 901 and a transceiver module 902. Optionally, the communication apparatus 900 may further include a storage unit (not shown in FIG. 9). The storage unit may be configured to store instructions (code or a program) and/or data. The processing module 901 and the transceiver module 902 may be coupled to the storage unit. For example, the processing module 901 may read the instructions (the code or the program) and/or the data in the storage unit, to implement a corresponding method. The foregoing units may be independently disposed, or may be partially or completely integrated. For example, the transceiver module 902 may include a sending unit and a receiving unit.

In an example, the communication apparatus 900 may implement functions or steps implemented by the first mobility management function network element in the foregoing method embodiments.

The transceiver module 902 is configured to receive a first message from a first access network element, where the first message indicates that a terminal device is to be handed over from the first access network element to a second access network element.

The processing module 901 is configured to determine, based on the first message, that the terminal device is to perform mobility management function network element handover.

The transceiver module 902 is further configured to send a second message to a first access management function network element, where the second message is used to request the terminal device to perform mobility management function network element handover, or is used to request the terminal device to be handed over from the first mobility management function network element to a second mobility management function network element.

In an optional implementation, the transceiver module 902 is further configured to receive a third message from the first access management function network element, where the third message includes identification information and/or address information of the second mobility management function network element.

In an optional implementation, the transceiver module 902 is further configured to: receive a fourth message from the first access management function network element, where the fourth message indicates that the terminal device is not to perform access management function network element handover, or indicates that the terminal device is to perform access management function network element handover; and sending a fifth message to the second mobility management function network element, where the terminal device is not to perform access management function network element handover, and the fifth message includes information about the first access management function network element; or the terminal device is to perform access management function network element handover, and the fifth message includes information about a second access management function network element, where the second access management function network element is a target access management function network element for the terminal device during access management function network element handover.

In an optional implementation, the second message includes information corresponding to the second mobility management function network element and/or information corresponding to the second access network element.

In an optional implementation, the transceiver module 902 is further configured to send a sixth message to the second mobility management function network element, where the sixth message includes identification information of the second access network element and/or context information of the terminal device at the first mobility management function network element.

In an optional implementation, the processing module 901 is further configured to release a connection between the first mobility management function network element and the first access network element.

In an optional implementation, when determining, based on the first message, that the terminal device is to perform mobility management function network element handover, the processing module 901 is specifically configured to: determine, based on the first message, that the second access network element has no association relationship with the first mobility management function network element; and determine that the terminal device is to perform mobility management function network element handover. In an optional implementation, the transceiver module 902 is further configured to receive a first response message from the first access management function network element, where the first response message indicates that the terminal device is to perform mobility management function network element handover.

In an example, the communication apparatus 900 may implement functions or steps implemented by the first mobility management function network element in the foregoing method embodiments.

The transceiver module 902 is configured to receive a first message from a first access network element, where the first message indicates that a terminal device is to be handed over from the first access network element to a second access network element.

The processing module 901 is configured to determine, based on the first message, that the terminal device is not to perform mobility management function network element handover.

The transceiver module 902 is further configured to send a seventh message to a first access management function network element, where the seventh message is used to request the terminal device not to perform mobility management function network element handover.

In an optional implementation, the transceiver module 902 is further configured to receive a fourth message from the first access management function network element, where the fourth message indicates that the terminal device is to perform access management function network element handover.

In an optional implementation, the transceiver module 902 is further configured to: send an eighth message to a second access management function network element; or receive an eighth message from a second access management function network element, where the eighth message is used to request to establish a connection between the first mobility management function network element and the second access management function network element, and the second access management function network element is a target access management function network element for the terminal device during access management function network element handover. In an optional implementation, the seventh message includes information corresponding to the second access network element.

In an optional implementation, the processing module 901 is further configured to release a connection between the first mobility management function network element and the first access network element.

In an optional implementation, when determining, based on the first message, that the terminal device is not to perform mobility management function network element handover, the processing module 901 is specifically configured to: determine, based on the first message, that the second access network element has an association relationship with the first mobility management function network element; and determine that the terminal device is not to perform mobility management function network element handover.

In an optional implementation, the transceiver module 902 is further configured to receive a second response message from the first access management function network element, where the second response message indicates that the terminal device is not to perform mobility management function network element handover.

In another example, the communication apparatus 900 may implement functions or steps implemented by the first access management function network element in the foregoing method embodiments.

The transceiver module 902 is configured to: receive a second message from a first mobility management function network element, where the second message is used to request a terminal device to perform mobility management function network element handover, or is used to request the terminal device to be handed over from the first mobility management function network element to a second mobility management function network element, and the terminal device is to be handed over from a first access network element to a second access network element; and send a first response message to the first mobility management function network element, where the first response message indicates that the terminal device is to perform mobility management function network element handover.

In an optional implementation, the transceiver module 902 is further configured to send a third message to the first mobility management function network element, where the third message includes identification information and/or address information of the second mobility management function network element.

In an optional implementation, the processing module 901 is configured to determine whether the terminal device is to perform access management function network element handover.

In an optional implementation, the transceiver module 902 is further configured to: send a ninth message to a second access management function network element, where the ninth message is used to request the terminal device to perform mobility management function network element handover, and the second access management function network element is a target access management function network element for the terminal device during access management function network element handover; and receive a tenth message from the second access management function network element, where the tenth message includes the identification information and/or address information of the second mobility management function network element.

In an optional implementation, the transceiver module 902 is further configured to: receive an eleventh message from the second mobility management function network element; or send an eleventh message to the second mobility management function network element, where the eleventh message is used to request to establish a connection between the second mobility management function network element and the first access management function network element.

In an optional implementation, the transceiver module 902 is further configured to send a fourth message to the first mobility management function network element, where the fourth message indicates that the terminal device is not to perform access management function network element handover, or indicates that the terminal device is to perform access management function network element handover.

In an optional implementation, when determining whether the terminal device is to perform access management function network element handover, the processing module 901 is specifically configured to: when the second access network element has an association relationship with the first access management function network element, determine that the terminal device is not to perform access management function network element handover; or when the second access network element has no association relationship with the first access management function network element, determine that the terminal device is to perform access management function network element handover.

In an optional implementation, the second message includes information corresponding to the second mobility management function network element and/or information corresponding to the second access network element.

In an optional implementation, the processing module 901 is further configured to release a connection between the first access management function network element and the first access network element.

In another example, the communication apparatus 900 may implement functions or steps implemented by the first access management function network element in the foregoing method embodiments.

The transceiver module 902 is configured to: receive a seventh message from a first mobility management function network element, where the seventh message is used to request a terminal device not to perform mobility management function network element handover, and the terminal device is to be handed over from a first access network element to a second access network element; and send a second response message to the first mobility management function network element, where the second response message indicates that the terminal device is not to perform mobility management function network element handover.

In an optional implementation, the processing module 901 is configured to determine that the terminal device is to perform access management function network element handover.

In an optional implementation, the transceiver module 902 is further configured to send a fourth message to the first mobility management function network element, where the fourth message indicates that the terminal device is to perform access management function network element handover.

In an optional implementation, when determining that the terminal device is to perform access management function network element handover, the processing module 901 is specifically configured to: when the second access network element has no association relationship with the first access management function network element, determine that the terminal device is to perform access management function network element handover.

In an optional implementation, the seventh message includes information corresponding to the second access network element.

In an optional implementation, the processing module 901 is further configured to release a connection between the first access management function network element and the first access network element.

In another example, the communication apparatus 900 may implement functions or steps implemented by the second mobility management function network element in the foregoing method embodiments.

The transceiver module 902 is configured to: receive a fifth message from a first mobility management function network element; and if the fifth message includes information about a first access management function network element, send an eleventh message to the first access management function network element, where the eleventh message is used to request to establish a connection between the second mobility management function network element and the first access management function network element; or if the fifth message includes information about a second access management function network element, send a twelfth message to the second access management function network element, where the twelfth message is used to request to establish a connection between the second mobility management function network element and the second access management function network element, the second access management function network element is a target access management function network element for a terminal device during access management function network element handover, and the terminal device is to be handed over from a first access network element to a second access network element.

In an optional implementation, the transceiver module 902 is further configured to receive a sixth message from the first mobility management function network element, where the sixth message includes identification information of the second access network element and/or context information of the terminal device at the first mobility management function network element; and the processing module 901 is configured to update context information of the terminal device based on the sixth message.

In another example, the communication apparatus 900 may implement functions or steps implemented by the second mobility management function network element in the foregoing method embodiments.

The transceiver module 902 is configured to: receive an eleventh message from a first access management function network element, where the eleventh message is used to request to establish a connection between the second mobility management function network element and the first access management function network element; and receive a twelfth message from a second access management function network element, where the twelfth message is used to request to establish a connection between the second mobility management function network element and the second access management function network element, the second access management function network element is a target access management function network element for a terminal device during access management function network element handover, and the terminal device is to be handed over from a first access network element to a second access network element.

In an optional implementation, the transceiver module 902 is further configured to receive a sixth message from the first mobility management function network element, where the sixth message includes identification information of the second access network element and/or context information of the terminal device at the first mobility management function network element; and the processing module 901 is configured to update context information of the terminal device based on the sixth message.

In still another example, the communication apparatus 900 may implement functions or steps implemented by the second access management function network element in the foregoing method embodiments.

The transceiver module 902 is configured to: receive a ninth message from a first access management function network element, where the ninth message is used to request a terminal device to perform mobility management function network element handover; and if the terminal device is not to perform mobility management function network element handover, send an eighth message to a first mobility management function network element, where the eighth message is used to request to establish a connection between the first mobility management function network element and the second access management function network element; or if the terminal device is to perform mobility management function network element handover, send a twelfth message to a second mobility management function network element, where the twelfth message is used to request to establish a connection between the second mobility management function network element and the second access management function network element, the second mobility management function network element is a target mobility management function network element for the terminal device during mobility management function network element handover, and the terminal device is to be handed over from a first access network element to a second access network element.

In an optional implementation, the transceiver module 902 is further configured to send a tenth message to the first access management function network element, where the tenth message includes identification information and/or address information of the second mobility management function network element.

In still another example, the communication apparatus 900 may implement functions or steps implemented by the second access management function network element in the foregoing method embodiments.

The transceiver module 902 is configured to: receive an eighth message from a first mobility management function network element, where the eighth message is used to request to establish a connection between the first mobility management function network element and the second access management function network element; or receive a twelfth message from a second mobility management function network element, where the twelfth message is used to request to establish a connection between the second mobility management function network element and the second access management function network element, the second mobility management function network element is a target mobility management function network element for a terminal device during mobility management function network element handover, and the terminal device is to be handed over from a first access network element to a second access network element.

In an optional implementation, the transceiver module 902 is further configured to: receive a ninth message from the first access management function network element, where the ninth message is used to request the terminal device to perform mobility management function network element handover; and send a tenth message to the first access management function network element, where the tenth message includes identification information and/or address information of the second mobility management function network element.

For more detailed descriptions of the processing module 901 and the transceiver module 902, directly refer to related descriptions in the method embodiment shown in FIG. 4, FIG. 5, FIG. 6, FIG. 7, or FIG. 8. Details are not described herein again.

FIG. 10 shows a communication apparatus 1000 according to an embodiment of this application. The communication apparatus 1000 may be a first mobility management function network element, and can implement functions of the first mobility management function network element in the method provided in embodiments of this application. Alternatively, the communication apparatus 1000 may be a first access management function network element, and can implement functions of the first access management function network element in the method provided in embodiments of this application. Alternatively, the communication apparatus 1000 may be a second mobility management function network element, and can implement functions of the second mobility management function network element in the method provided in embodiments of this application. Alternatively, the communication apparatus 1000 may be a second access management function network element, and can implement functions of the second access management function network element in the method provided in embodiments of this application. Alternatively, the communication apparatus 1000 may be an apparatus that can support the first mobility management function network element in implementing corresponding functions in the method provided in embodiments of this application, an apparatus that can support the first access management function network element in implementing corresponding functions in the method provided in embodiments of this application, an apparatus that can support the second mobility management function network element in implementing corresponding functions in the method provided in embodiments of this application, or an apparatus that can support the second access management function network element in implementing corresponding functions in the method provided in embodiments of this application. The communication apparatus 1000 may be a chip system. In this embodiment of this application, the chip system may include a chip, or may include a chip and another discrete component.

The communication apparatus 1000 includes at least one processor 1020, configured to implement or support the communication apparatus 1000 in implementing functions of a host radio access node, a terminal device, or an access and mobility management function network element in the methods provided in embodiments of this application. For details, refer to detailed descriptions in the method examples. Details are not described herein again.

Optionally, the communication apparatus 1000 may further include at least one memory 1030, configured to store program instructions and/or data. The memory 1030 is coupled to the processor 1020. The coupling in this embodiment of this application may be an indirect coupling or a communication connection between apparatuses, units, or modules in an electrical form, a mechanical form, or another form, and is used for information exchange between the apparatuses, the units, or the modules. The processor 1020 may cooperate with the memory 1030. The processor 1020 may execute the program instructions and/or the data stored in the memory 1030, so that the communication apparatus 1000 implements a corresponding method. At least one of the at least one memory may be included in the processor. The memory 1030 may exist independently, for example, an off-chip memory, and is connected to the processor 1020 through a communication bus (represented by a bold line 1040 in FIG. 10). The memory 1030 may alternatively be integrated with the processor 1020.

Optionally, the communication apparatus 1000 may further include a communication interface 1010, configured to communicate with another device by using a transmission medium, so that an apparatus used in the communication apparatus 1000 can communicate with the another device. For example, when the communication apparatus is the first mobility management function network element, the another device is the first access management function network element, the second mobility management function network element, or the like; or when the communication apparatus is the first access management function network element, the another device is the first mobility management function network element, the second access management function network element, or the like; or when the communication apparatus is the second mobility management function network element, the another device is the first mobility management function network element, the second access management function network element, or the like; or when the communication apparatus is the second access management function network element, the another device is the first access management function network element, the second mobility management function network element, or the like. The processor 1020 may receive and send data through the communication interface 1010. The communication interface 1010 may be specifically a transceiver, a chip pin, or the like.

In hardware implementation, the transceiver module 902 may be a transceiver or a chip pin, and is integrated into the communication apparatus 1000, to form the communication interface 1010.

A specific connection medium between the communication interface 1010, the processor 1020, and the memory 1030 is not limited in embodiments of this application. In this embodiment of this application, in FIG. 10, the memory 1030, the processor 1020, and the communication interface 1010 are connected by using the communication bus 1040. A manner of connection between other components is merely an example for description, and is not limited thereto. The communication bus 1040 may be classified into an address bus, a data bus, a control bus, and the like. For ease of representation, only one thick line is used to represent the communication bus in FIG. 10, but this does not mean that there is only one communication bus or only one type of communication bus.

In embodiments of this application, the processor 1020 may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

In this embodiment of this application, the memory 1030 may be a nonvolatile memory such as a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

An embodiment of this application further provides a communication system. Specifically, the communication system includes at least one of a first mobility management function network element, a first access management function network element, a second mobility management function network element, or a second access management function network element.

An embodiment of this application further provides a computer-readable storage medium, including instructions. When the instructions are run on a computer, the computer is enabled to perform the methods in the foregoing embodiments.

An embodiment of this application further provides a computer program product, including instructions. When the computer program product runs on a computer, the computer is enabled to perform the methods in the foregoing embodiments.

An embodiment of this application provides a chip system. The chip system includes a processor, and may further include a memory and/or a communication interface, to implement functions of the first mobility management function network element, the first access management function network element, the second mobility management function network element, or the second access management function network element in the foregoing method. The chip system may include a chip, or may include a chip and another discrete component.

It should be understood that serial numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, wherein the method comprises:
receiving, by a first mobility management function network element, a first message from a first access network element, wherein the first message indicates that a terminal device is to be handed over from the first access network element to a second access network element;
determining, by the first mobility management function network element based on the first message, that the terminal device is to perform mobility management function network element handover; and
sending, by the first mobility management function network element, a second message to a first access management function network element, wherein the second message is used to request the terminal device to perform mobility management function network element handover, or is used to request the terminal device to be handed over from the first mobility management function network element to a second mobility management function network element.

2. The method according to claim 1, wherein the method further comprises:
receiving, by the first mobility management function network element, a third message from the first access management function network element, wherein the third message comprises identification information and/or address information of the second mobility management function network element.

3. The method according to claim 1 or 2, wherein the method further comprises:
receiving, by the first mobility management function network element, a fourth message from the first access management function network element, wherein the fourth message indicates that the terminal device is not to perform access management function network element handover, or indicates that the terminal device is to perform access management function network element handover; and
sending, by the first mobility management function network element, a fifth message to the second mobility management function network element, wherein the terminal device is not to perform access management function network element handover, and the fifth message comprises information about the first access management function network element; or the terminal device is to perform access management function network element handover, and the fifth message comprises information about a second access management function network element, wherein the second access management function network element is a target access management function network element for the terminal device during access management function network element handover.

4. The method according to any one of claims 1 to 3, wherein the second message comprises information corresponding to the second mobility management function network element and/or information corresponding to the second access network element.

5. The method according to any one of claims 1 to 4, wherein the method further comprises:
sending, by the first mobility management function network element, a sixth message to the second mobility management function network element, wherein the sixth message comprises identification information of the second access network element and/or context information of the terminal device at the first mobility management function network element.

6. The method according to any one of claims 1 to 5, wherein the method further comprises:
releasing, by the first mobility management function network element, a connection between the first mobility management function network element and the first access network element.

7. The method according to any one of claims 1 to 6, wherein the determining, by the first mobility management function network element based on the first message, that the terminal device is to perform mobility management function network element handover comprises:
determining, by the first mobility management function network element based on the first message, that the second access network element has no association relationship with the first mobility management function network element; and
determining, by the first mobility management function network element, that the terminal device is to perform mobility management function network element handover.

8. The method according to any one of claims 1 to 7, wherein the method further comprises:
receiving, by the first mobility management function network element, a first response message from the first access management function network element, wherein the first response message indicates that the terminal device is to perform mobility management function network element handover.

9. A communication method, comprising:
receiving, by a first mobility management function network element, a first message from a first access network element, wherein the first message indicates that a terminal device is to be handed over from the first access network element to a second access network element;
determining, by the first mobility management function network element based on the first message, that the terminal device is not to perform mobility management function network element handover; and
sending, by the first mobility management function network element, a seventh message to a first access management function network element, wherein the seventh message is used to request the terminal device not to perform mobility management function network element handover.

10. The method according to claim 9, wherein the method further comprises:
receiving, by the first mobility management function network element, a fourth message from the first access management function network element, wherein the fourth message indicates that the terminal device is to perform access management function network element handover.

11. The method according to claim 9 or 10, wherein the method further comprises:
sending, by the first mobility management function network element, an eighth message to a second access management function network element; or
receiving, by the first mobility management function network element, an eighth message from a second access management function network element, wherein
the eighth message is used to request to establish a connection between the first mobility management function network element and the second access management function network element, and the second access management function network element is a target access management function network element for the terminal device during access management function network element handover.

12. The method according to any one of claims 9 to 11, wherein the seventh message comprises information corresponding to the second access network element.

13. The method according to any one of claims 9 to 12, wherein the method further comprises:
releasing, by the first mobility management function network element, a connection between the first mobility management function network element and the first access network element.

14. The method according to any one of claims 9 to 13, wherein the determining, by the first mobility management function network element based on the first message, that the terminal device is not to perform mobility management function network element handover comprises:
determining, by the first mobility management function network element based on the first message, that the second access network element has an association relationship with the first mobility management function network element; and
determining, by the first mobility management function network element, that the terminal device is not to perform mobility management function network element handover.

15. The method according to any one of claims 9 to 14, wherein the method further comprises:
receiving, by the first mobility management function network element, a second response message from the first access management function network element, wherein the second response message indicates that the terminal device is not to perform mobility management function network element handover.

16. A communication method, comprising:
receiving, by a first access management function network element, a second message from a first mobility management function network element, wherein the second message is used to request a terminal device to perform mobility management function network element handover, or is used to request the terminal device to be handed over from the first mobility management function network element to a second mobility management function network element, and the terminal device is to be handed over from a first access network element to a second access network element; and
sending, by the first access management function network element, a first response message to the first mobility management function network element, wherein the first response message indicates that the terminal device is to perform mobility management function network element handover.

17. The method according to claim 16, wherein the method further comprises:
sending, by the first access management function network element, a third message to the first mobility management function network element, wherein the third message comprises identification information and/or address information of the second mobility management function network element.

18. The method according to claim 16 or 17, wherein the method further comprises:
determining, by the first access management function network element, whether the terminal device is to perform access management function network element handover.

19. The method according to claim 18, wherein the method further comprises:
sending, by the first access management function network element, a ninth message to a second access management function network element, wherein the ninth message is used to request the terminal device to perform mobility management function network element handover, and the second access management function network element is a target access management function network element for the terminal device during access management function network element handover; and
receiving, by the first access management function network element, a tenth message from the second access management function network element, wherein the tenth message comprises the identification information and/or address information of the second mobility management function network element.

20. The method according to claim 18, wherein the method further comprises:
receiving, by the first access management function network element, an eleventh message from the second mobility management function network element; or
sending, by the first access management function network element, an eleventh message to the second mobility management function network element, wherein
the eleventh message is used to request to establish a connection between the second mobility management function network element and the first access management function network element.

21. The method according to any one of claims 18 to 20, wherein the method further comprises:
sending, by the first access management function network element, a fourth message to the first mobility management function network element, wherein the fourth message indicates that the terminal device is not to perform access management function network element handover, or indicates that the terminal device is to perform access management function network element handover.

22. The method according to any one of claims 18 to 21, wherein the determining, by the first access management function network element, whether the terminal device is to perform access management function network element handover comprises:
when the second access network element has an association relationship with the first access management function network element, determining, by the first access management function network element, that the terminal device is not to perform access management function network element handover; or
when the second access network element has no association relationship with the first access management function network element, determining, by the first access management function network element, that the terminal device is to perform access management function network element handover.

23. The method according to any one of claims 16 to 22, wherein the second message comprises information corresponding to the second mobility management function network element and/or information corresponding to the second access network element.

24. The method according to any one of claims 16 to 23, wherein the method further comprises:
releasing, by the first access management function network element, a connection between the first access management function network element and the first access network element.

25. A communication method, comprising:
receiving, by a first access management function network element, a seventh message from a first mobility management function network element, wherein the seventh message is used to request a terminal device not to perform mobility management function network element handover, and the terminal device is to be handed over from a first access network element to a second access network element; and
sending, by the first access management function network element, a second response message to the first mobility management function network element, wherein the second response message indicates that the terminal device is not to perform mobility management function network element handover.

26. The method according to claim 25, wherein the method further comprises:
determining, by the first access management function network element, that the terminal device is to perform access management function network element handover.

27. The method according to claim 26, wherein the method further comprises:
sending, by the first access management function network element, a fourth message to the first mobility management function network element, wherein the fourth message indicates that the terminal device is to perform access management function network element handover.

28. The method according to claim 26 or 27, wherein the determining, by the first access management function network element, that the terminal device is to perform access management function network element handover comprises:
when the second access network element has no association relationship with the first access management function network element, determining, by the first access management function network element, that the terminal device is to perform access management function network element handover.

29. The method according to any one of claims 25 to 28, wherein the seventh message comprises information corresponding to the second access network element.

30. The method according to any one of claims 25 to 29, wherein the method further comprises:
releasing, by the first access management function network element, a connection between the first access management function network element and the first access network element.

31. A communication method, comprising:
receiving, by a second mobility management function network element, a fifth message from a first mobility management function network element; and
if the fifth message comprises information about a first access management function network element, sending, by the second mobility management function network element, an eleventh message to the first access management function network element, wherein the eleventh message is used to request to establish a connection between the second mobility management function network element and the first access management function network element; or
if the fifth message comprises information about a second access management function network element, sending, by the second mobility management function network element, a twelfth message to the second access management function network element, wherein the twelfth message is used to request to establish a connection between the second mobility management function network element and the second access management function network element, the second access management function network element is a target access management function network element for a terminal device during access management function network element handover, and the terminal device is to be handed over from a first access network element to a second access network element.

32. The method according to claim 31, wherein the method further comprises:
receiving, by the second mobility management function network element, a sixth message from the first mobility management function network element, wherein the sixth message comprises identification information of the second access network element and/or context information of the terminal device at the first mobility management function network element; and
updating, by the second mobility management function network element, context information of the terminal device based on the sixth message.

33. A communication method, comprising:
receiving, by a second mobility management function network element, an eleventh message from a first access management function network element, wherein the eleventh message is used to request to establish a connection between the second mobility management function network element and the first access management function network element; or
receiving, by a second mobility management function network element, a twelfth message from a second access management function network element, wherein the twelfth message is used to request to establish a connection between the second mobility management function network element and the second access management function network element, the second access management function network element is a target access management function network element for a terminal device during access management function network element handover, and the terminal device is to be handed over from a first access network element to a second access network element.

34. The method according to claim 33, wherein the method further comprises:
receiving, by the second mobility management function network element, a sixth message from the first mobility management function network element, wherein the sixth message comprises identification information of the second access network element and/or context information of the terminal device at the first mobility management function network element; and
updating, by the second mobility management function network element, context information of the terminal device based on the sixth message.

35. A communication method, comprising:
receiving, by a second access management function network element, a ninth message from a first access management function network element, wherein the ninth message is used to request the terminal device to perform mobility management function network element handover; and
if the terminal device is not to perform mobility management function network element handover, sending, by the second access management function network element, an eighth message to a first mobility management function network element, wherein the eighth message is used to request to establish a connection between the first mobility management function network element and the second access management function network element; or
if the terminal device is to perform mobility management function network element handover, sending, by the second access management function network element, a twelfth message to a second mobility management function network element, wherein the twelfth message is used to request to establish a connection between the second mobility management function network element and the second access management function network element, the second mobility management function network element is a target mobility management function network element for the terminal device during mobility management function network element handover, and the terminal device is to be handed over from a first access network element to a second access network element.

36. The method according to claim 35, wherein the method further comprises:
sending, by the second access management function network element, a tenth message to the first access management function network element, wherein the tenth message comprises identification information and/or address information of the second mobility management function network element.

37. A communication method, comprising:
receiving, by a second access management function network element, an eighth message from a first mobility management function network element, wherein the eighth message is used to request to establish a connection between the first mobility management function network element and the second access management function network element; or
receiving, by a second access management function network element, a twelfth message from a second mobility management function network element, wherein the twelfth message is used to request to establish a connection between the second mobility management function network element and the second access management function network element, the second mobility management function network element is a target mobility management function network element for a terminal device during mobility management function network element handover, and the terminal device is to be handed over from a first access network element to a second access network element.

38. The method according to claim 37, wherein the method further comprises:
receiving, by the second access management function network element, a ninth message from the first access management function network element, wherein the ninth message is used to request the terminal device to perform mobility management function network element handover; and
sending, by the second access management function network element, a tenth message to the first access management function network element, wherein the tenth message comprises identification information and/or address information of the second mobility management function network element.

39. A communication apparatus, wherein the communication apparatus comprises a processing module and a transceiver module;
the transceiver module is configured to receive a first message from a first access network element, wherein the first message indicates that a terminal device is to be handed over from the first access network element to a second access network element;
the processing module is configured to determine, based on the first message, that the terminal device is to perform mobility management function network element handover; and
the transceiver module is further configured to send a second message to a first access management function network element, wherein the second message is used to request the terminal device to perform mobility management function network element handover, or is used to request the terminal device to be handed over from the communication apparatus to a second mobility management function network element.

40. The apparatus according to claim 39, wherein the transceiver module is further configured to receive a third message from the first access management function network element, wherein the third message comprises identification information and/or address information of the second mobility management function network element.

41. The apparatus according to claim 39 or 40, wherein the transceiver module is further configured to: receive a fourth message from the first access management function network element, wherein the fourth message indicates that the terminal device is not to perform access management function network element handover, or indicates that the terminal device is to perform access management function network element handover; and send a fifth message to the second mobility management function network element, wherein the terminal device is not to perform access management function network element handover, and the fifth message comprises information about the first access management function network element; or the terminal device is to perform access management function network element handover, and the fifth message comprises information about a second access management function network element, wherein the second access management function network element is a target access management function network element for the terminal device during access management function network element handover.

42. The apparatus according to any one of claims 39 to 41, wherein the second message comprises information corresponding to the second mobility management function network element and/or information corresponding to the second access network element.

43. The apparatus according to any one of claims 39 to 42, wherein the transceiver module is further configured to send a sixth message to the second mobility management function network element, wherein the sixth message comprises identification information of the second access network element and/or context information of the terminal device at the communication apparatus.

44. The apparatus according to any one of claims 39 to 43, wherein the processing module is further configured to release a connection between the communication apparatus and the first access network element.

45. The apparatus according to any one of claims 39 to 44, wherein the processing module determines, in the following manner based on the first message, that the terminal device is to perform mobility management function network element handover:
determining, based on the first message, that the second access network element has no association relationship with the communication apparatus; and
determining that the terminal device is to perform mobility management function network element handover.

46. The apparatus according to any one of claims 39 to 45, wherein the transceiver module is further configured to receive a first response message from the first access management function network element, wherein the first response message indicates that the terminal device is to perform mobility management function network element handover.

47. A communication apparatus, wherein the communication apparatus comprises a processing module and a transceiver module;
the transceiver module is configured to receive a first message from a first access network element, wherein the first message indicates that a terminal device is to be handed over from the first access network element to a second access network element;
the processing module is configured to determine, based on the first message, that the terminal device is not to perform mobility management function network element handover; and
the transceiver module is further configured to send a seventh message to a first access management function network element, wherein the seventh message is used to request the terminal device not to perform mobility management function network element handover.

48. The apparatus according to claim 47, wherein the transceiver module is further configured to receive a fourth message from the first access management function network element, wherein the fourth message indicates that the terminal device is to perform access management function network element handover.

49. The apparatus according to claim 47 or 48, wherein the transceiver module is further configured to:
send an eighth message to a second access management function network element; or
receive an eighth message from a second access management function network element, wherein
the eighth message is used to request to establish a connection between the communication apparatus and the second access management function network element, and the second access management function network element is a target access management function network element for the terminal device during access management function network element handover.

50. The apparatus according to any one of claims 47 to 49, wherein the seventh message comprises information corresponding to the second access network element.

51. The apparatus according to any one of claims 47 to 50, wherein the processing module is further configured to release a connection between the communication apparatus and the first access network element.

52. The apparatus according to any one of claims 47 to 51, wherein the processing module determines, in the following manner based on the first message, that the terminal device is not to perform mobility management function network element handover:
determining, based on the first message, that the second access network element has an association relationship with the communication apparatus; and
determining that the terminal device is not to perform mobility management function network element handover.

53. The apparatus according to any one of claims 47 to 52, wherein the transceiver module is further configured to receive a second response message from the first access management function network element, wherein the second response message indicates that the terminal device is not to perform mobility management function network element handover.

54. A communication apparatus, wherein the communication apparatus comprises a processing module and a transceiver module;
under control of the processing module, the transceiver module is configured to: receive a second message from a first mobility management function network element, wherein the second message is used to request a terminal device to perform mobility management function network element handover, or is used to request the terminal device to be handed over from the first mobility management function network element to a second mobility management function network element, and the terminal device is to be handed over from a first access network element to a second access network element; and send a first response message to the first mobility management function network element, wherein the first response message indicates that the terminal device is to perform mobility management function network element handover.

55. The apparatus according to claim 54, wherein the transceiver module is further configured to send a third message to the first mobility management function network element, wherein the third message comprises identification information and/or address information of the second mobility management function network element.

56. The apparatus according to claim 54 or 55, wherein the processing module is further configured to determine whether the terminal device is to perform access management function network element handover.

57. The apparatus according to claim 56, wherein the transceiver module is further configured to:
send a ninth message to a second access management function network element, wherein the ninth message is used to request the terminal device to perform mobility management function network element handover, and the second access management function network element is a target access management function network element for the terminal device during access management function network element handover; and
receive a tenth message from the second access management function network element, wherein the tenth message comprises the identification information and/or address information of the second mobility management function network element.

58. The apparatus according to claim 56, wherein the transceiver module is further configured to:
receive an eleventh message from the second mobility management function network element; or
send an eleventh message to the second mobility management function network element, wherein
the eleventh message is used to request to establish a connection between the second mobility management function network element and the communication apparatus.

59. The apparatus according to any one of claims 56 to 58, wherein the transceiver module is further configured to send a fourth message to the first mobility management function network element, wherein the fourth message indicates that the terminal device is not to perform access management function network element handover, or indicates that the terminal device is to perform access management function network element handover.

60. The apparatus according to any one of claims 56 to 59, wherein the processing module determines, in the following manner, whether the terminal device is to perform access management function network element handover:
when the second access network element has an association relationship with the communication apparatus, determining that the terminal device is not to perform access management function network element handover; or
when the second access network element has no association relationship with the communication apparatus, determining that the terminal device is to perform access management function network element handover.

61. The apparatus according to any one of claims 54 to 60, wherein the second message comprises information corresponding to the second mobility management function network element and/or information corresponding to the second access network element.

62. The apparatus according to any one of claims 54 to 61, wherein the processing module is further configured to release a connection between the communication apparatus and the first access network element.

63. A communication apparatus, wherein the communication apparatus comprises a processing module and a transceiver module;
under control of the processing module, the transceiver module is configured to: receive a seventh message from a first mobility management function network element, wherein the seventh message is used to request a terminal device not to perform mobility management function network element handover, and the terminal device is to be handed over from a first access network element to a second access network element; and send a second response message to the first mobility management function network element, wherein the second response message indicates that the terminal device is not to perform mobility management function network element handover.

64. The apparatus according to claim 63, wherein the processing module is further configured to determine that the terminal device is to perform access management function network element handover.

65. The apparatus according to claim 64, wherein the transceiver module is further configured to send a fourth message to the first mobility management function network element, wherein the fourth message indicates that the terminal device is to perform access management function network element handover.

66. The apparatus according to claim 64 or 65, wherein the processing module determines, in the following manner, that the terminal device is to perform access management function network element handover:
when the second access network element has no association relationship with the communication apparatus, determining that the terminal device is to perform access management function network element handover.

67. The apparatus according to any one of claims 63 to 66, wherein the seventh message comprises information corresponding to the second access network element.

68. The apparatus according to any one of claims 63 to 67, wherein the processing module is further configured to release a connection between the communication apparatus and the first access network element.

69. A communication apparatus, wherein the communication apparatus comprises a processing module and a transceiver module;
under control of the processing module, the transceiver module is configured to: receive a fifth message from a first mobility management function network element; and
if the fifth message comprises information about a first access management function network element, send an eleventh message to the first access management function network element, wherein the eleventh message is used to request to establish a connection between the communication apparatus and the first access management function network element; or
if the fifth message comprises information about a second access management function network element, send a twelfth message to the second access management function network element, wherein the twelfth message is used to request to establish a connection between the communication apparatus and the second access management function network element, the second access management function network element is a target access management function network element for a terminal device during access management function network element handover, and the terminal device is to be handed over from a first access network element to a second access network element.

70. The apparatus according to claim 69, wherein the transceiver module is further configured to receive a sixth message from the first mobility management function network element, wherein the sixth message comprises identification information of the second access network element and/or context information of the terminal device at the first mobility management function network element; and
the processing module is further configured to update context information of the terminal device based on the sixth message.

71. A communication apparatus, wherein the communication apparatus comprises a processing module and a transceiver module;
under control of the processing module, the transceiver module is configured to: receive an eleventh message from a first access management function network element, wherein the eleventh message is used to request to establish a connection between the communication apparatus and the first access management function network element; or
receive a twelfth message from a second access management function network element, wherein the twelfth message is used to request to establish a connection between the communication apparatus and the second access management function network element, the second access management function network element is a target access management function network element for a terminal device during access management function network element handover, and the terminal device is to be handed over from a first access network element to a second access network element.

72. The apparatus according to claim 71, wherein the transceiver module is further configured to receive a sixth message from the first mobility management function network element, wherein the sixth message comprises identification information of the second access network element and/or context information of the terminal device at the first mobility management function network element; and
the processing module is further configured to update context information of the terminal device based on the sixth message.

73. A communication apparatus, wherein the communication apparatus comprises a processing module and a transceiver module;
under control of the processing module, the transceiver module is configured to: receive a ninth message from a first access management function network element, wherein the ninth message is used to request the terminal device to perform mobility management function network element handover; and
if the terminal device is not to perform mobility management function network element handover, send an eighth message to a first mobility management function network element, wherein the eighth message is used to request to establish a connection between the first mobility management function network element and the communication apparatus; or
if the terminal device is to perform mobility management function network element handover, send a twelfth message to a second mobility management function network element, wherein the twelfth message is used to request to establish a connection between the second mobility management function network element and the communication apparatus, the second mobility management function network element is a target mobility management function network element for the terminal device during mobility management function network element handover, and the terminal device is to be handed over from a first access network element to a second access network element.

74. The apparatus according to claim 73, wherein the transceiver module is further configured to send a tenth message to the first access management function network element, wherein the tenth message comprises identification information and/or address information of the second mobility management function network element.

75. A communication apparatus, wherein the communication apparatus comprises a processing module and a transceiver module;
under control of the processing module, the transceiver module is configured to: receive an eighth message from a first mobility management function network element, wherein the eighth message is used to request to establish a connection between the first mobility management function network element and the communication apparatus; or
receive a twelfth message from a second mobility management function network element, wherein the twelfth message is used to request to establish a connection between the second mobility management function network element and the communication apparatus, the second mobility management function network element is a target mobility management function network element for a terminal device during mobility management function network element handover, and the terminal device is to be handed over from a first access network element to a second access network element.

76. The apparatus according to claim 75, wherein the transceiver module is further configured to: receive a ninth message from the first access management function network element, wherein the ninth message is used to request the terminal device to perform mobility management function network element handover; and send a tenth message to the first access management function network element, wherein the tenth message comprises identification information and/or address information of the second mobility management function network element.

77. A communication apparatus, comprising a processor and a memory, wherein the memory and the processor are coupled or integrated together, and the processor is configured to perform the method according to any one of claims 1 to 8, or configured to perform the method according to any one of claims 9 to 15, or configured to perform the method according to any one of claims 16 to 24, or configured to perform the method according to any one of claims 25 to 30, or configured to perform the method according to claim 31 or 32, or configured to perform the method according to claim 33 or 34, or configured to perform the method according to claim 35 or 36, or configured to perform the method according to claim 37 or 38.

78. The apparatus according to claim 77, wherein the apparatus is a chip.

79. A computer-readable storage medium, wherein the computer-readable storage medium is configured to store a computer program, and when the computer program runs on a computer, the computer is enabled to perform the method according to any one of claims 1 to 8, or the computer is enabled to perform the method according to any one of claims 9 to 15, or the computer is enabled to perform the method according to any one of claims 16 to 24, or the computer is enabled to perform the method according to any one of claims 25 to 30, or the computer is enabled to perform the method according to claim 31 or 32, or the computer is enabled to perform the method according to claim 33 or 34, or the computer is enabled to perform the method according to claim 35 or 36, or the computer is enabled to perform the method according to claim 37 or 38.

80. A computer program product, wherein the computer program product comprises a computer program, and when the computer program runs on a computer, the computer is enabled to perform the method according to any one of claims 1 to 8, or the computer is enabled to perform the method according to any one of claims 9 to 15, or the computer is enabled to perform the method according to any one of claims 16 to 24, or the computer is enabled to perform the method according to any one of claims 25 to 30, or the computer is enabled to perform the method according to claim 31 or 32, or the computer is enabled to perform the method according to claim 33 or 34, or the computer is enabled to perform the method according to claim 35 or 36, or the computer is enabled to perform the method according to claim 37 or 38.

81. A communication system, wherein the communication system comprises the communication apparatus according to any one of claims 39 to 46, the communication apparatus according to any one of claims 54 to 62, the communication apparatus according to claim 69 or 70, and the communication apparatus according to claim 73 or 74.

82. A communication system, wherein the communication system comprises the communication apparatus according to any one of claims 47 to 53, the communication apparatus according to any one of claims 63 to 68, the communication apparatus according to claim 71 or 72, and the communication apparatus according to claim 75 or 76.
